# EUROPEAN PATENT APPLICATION

(11) **EP 4 503 572 A1**
(43) Date of publication of application: **05.02.2025**
(21) Application number: 23778219.8
(22) Date of filing: 28.03.2023
(51) Int. Cl.: H04L 65/10

(54) **INFORMATION PROCESSING METHOD AND APPARATUS, AND COMMUNICATION DEVICE AND STORAGE MEDIUM**

(30) Priority: 29.03.2022 CN 202210326102
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: BAI, Xueqian, Beijing 100032 (CN); JIANG, Yi, Beijing 100032 (CN)
(74) Representative: Maiwald GmbH
(86) International application number: PCT/CN2023/084405
(87) International publication number: WO 2023/185854

(57) **Abstract**

Disclosed in the embodiments of the present disclosure are an information processing method and apparatus, and a communication device and a storage medium. The method comprises: a first network device receiving a first message, wherein the first message at least comprises first data channel (DC) information; and on the basis of at least one piece of subscription information, user subscriber information, configuration information and terminal/network capability information, the first network device determining whether to send a second message to a first network function.

## Description

### CROSS-REFERENCE TO RELATED APPLICATIONS

The disclosure claims priority to Chinese Patent Application No. 202210326102.7, filed on March 29, 2022, the entire contents of which are incorporated herein by reference.

### TECHNICAL FIELD

The disclosure relates to a field of communication technologies, and specifically to a method and an apparatus for establishing a data channel, a communication device and a storage medium.

### BACKGROUND

A data channel (DC) is a new mechanism of the next generation Internet Protocol (IP) Multimedia Subsystem (IMS) network. However, there are currently no clear regulations on an interface for interaction between the DC and the IMS network and a mechanism or a process for establishing the DC.

### SUMMARY

In order to solve the technical problems existing in the related art, embodiments of the present disclosure provide a method and an apparatus for information processing, a communication device and a storage medium.

To achieve the above objectives, technical solutions in the embodiments of the present disclosure are implemented as follows.

In a first aspect, the embodiments of the present disclosure provide a method for information processing. The method includes:
receiving by a first network device a first message, in which the first message includes at least first data channel (DC) information; and
determining by the first network device, whether to send a second message to a first network function based on at least one of subscription information, user contract information, configuration information, or terminal/network capability information.

In the above solution, the second message includes second DC information, and the second DC information is at least part of the first DC information.

In the above solution, the first DC information includes at least one of:
DC media description information;
DC identifier (ID) information;
label information;
DC capability information or information indicating whether a DC is supported by a device or a user;
an ID of a first device;
an ID of a second device, in which the second device is an opposite-end device relative to a first device;
audio information and/or video information; or
a DC establishment request.

In the above solution, the DC media description information includes at least one of:
the DC ID information; or
the label information.

In the above solution, the DC media description information includes one or more pieces of DC media description information.

In the above solution, the first DC information includes one or more pieces of DC media description information.

In the above solution, the DC capability information includes at least one of:
a DC capability;
a DC capability list;
a DC service or a DC application; or
a DC service list or a DC application list.

In the above solution, the DC establishment request includes at least one of:
the DC ID information; or
the label information.

In the above solution, the first message is a session initiation protocol (SIP) invite request message, a DC session description protocol (SDP) offer or a first DC request message.

In the above solution, the user contract information includes at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

In the above solution, the subscription information includes at least one of:
at least part of the first DC information;
information that a user device has signed a DC contract or has been authorized to use a DC capability, a DC service or a DC business;
an ID of a first device; or
an ID of a second device.

In the above solution, the configuration information includes at least one of:
at least part of the first DC information;
information that a user device has signed a DC contract or has been authorized to use a DC capability, a DC service or a DC business;
an ID of a first device; or
an ID of a second device.

In the above solution, the terminal/network capability information includes at least one of:
information on whether a network and/or a device supports a DC capability and/or a DC capability list; or
information on whether a network and/or a device supports a DC service/business, and/or a DC service/business list;
in which the network and/or the device includes at least one of: a first device, a first network, a second device, or a second network, in which the first network is a network where the first device is located, the second device is an opposite-end device relative to the first device, and the second network is a network where the second device is located.

In the above solution, the method further includes: in case that the first network device determines to send the second message to the first network function, sending by the first network device, the second message to the first network function.

In the above solution, the method further includes: receiving by the first network device, a third message from the first network function, in which the third message includes at least one of:
first indication information on whether to establish a first channel;
second indication information on whether to process the second message;
a first policy on how to establish a first channel;
a second policy on how to process a first channel establishment request; or
processing indication/policy information.
the processing indication/policy information, the first policy or the second policy includes at least one of following processing ways for a DC, a DC media stream, a DC media description or a DC establishment request: terminating, forwarding, newly establishing/initially establishing/originating.

In the above solution, the method further includes: sending by the first network device, a fourth message to a second network function, in which the fourth message is configured to perform at least one of:
indicating the second network function to set up or reserve DC media resources; or
completing media negotiation with a calling party and/or a called party.

In the above solution, in which the fourth message includes at least one of:
third indication information for indicating the second network function to set up or reserve DC media resources;
the processing indication/policy information; or
information of the first network function.

In the above solution, the method further includes: receiving by the first network device, a fifth message from the second network function, in which the fifth message includes at least negotiated third DC information and/or DC media resource information.

In the above solution, the method further includes: sending by the first network device, the third DC information and/or DC media resource information to the first network function.

In the above solution, the method further includes: receiving by the first network device, a sixth message from the first network function, in which the sixth message includes at least negotiated third DC information and/or DC media resource information.

In the above solution, the DC media resource information includes at least one of:
an Internet protocol (IP) address or a port number of the second network function.

In the above solution, the third DC information includes at least one of:
negotiated DC information that a DC is established with a first device or a first network;
DC information that a DC is to be established with a second device or a second network;
negotiated DC information; or
DC information to be negotiated.

In the above solution, the method further includes: sending by the first network device, a seventh message to a second network device, in which the second network device is a device of a first network where a first device is located;
in which the seventh message includes at least one of:
DC media resource information;
the third DC information; or
information of the second network function.

In the above solution, in which the second message is a notification message or a second DC request message.

In the above solution, the method further includes:
in case that the first network device determines not to send the second message to the first network function, performing at least one of:
determining first information, in which the first information is obtained by removing the first DC information from information carried in the first message;
sending the first information to a second network device, in which the second network device is a device of a first network where a first device is located.

In the above solution, the DC includes at least one of:

### a Bootstrap DC or an Application DC.

In a second aspect, the embodiments of the present disclosure provide a method for information processing. The method includes:
receiving by a first network function, a second message from a first network device;
performing by the first network function based on the second message, at least one action of:
   determining whether to establish the first channel;
   determining how to establish the first channel;
   determining how to process the first channel establishment request; or
   determining the processing indication/policy information.

In the above solution, the second message includes second DC information, and the second DC information is at least part of first DC information from a first device.

In the above solution, the second DC information includes at least one of:
DC media description information;
DC ID information;
label information;
DC capability information or information indicating whether the DC is supported by a device or a user;
an ID of a first device;
an ID of a second device, in which the second device is an opposite-end device relative to a first device;
audio information and/or video information; or
a DC establishment request.

In the above solution, the DC media description information includes at least one of:
the DC ID information; or
the label information.

In the above solution, the DC media description information includes one or more pieces of DC media description information.

In the above solution, the first DC information includes one or more pieces of DC media description information.

In the above solution, the DC capability information includes at least one of:
a DC capability;
a DC capability list;
a DC service or a DC application; or
a DC service list or a DC application list.

In the above solution, the DC establishment request includes at least one of:
the DC ID information; or
the label information.

In the above solution, the second message is a notification message or a second DC request message.

In the above solution, performing by the first network function based on the second message, at least one action of: determining whether to establish the first channel; determining how to establish the first channel; determining how to process the first channel establishment request; or determining the processing indication/policy information, includes:
performing by the first network function at least one of determining whether to establish the first channel; determining how to establish the first channel; determining how to process the first channel establishment request; or determining the processing indication/policy information, based on at least one of contract information, configuration information/an operator policy, terminal/network capability information, or at least part of information included in the second DC information.

In the above solution, the contract information includes at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

In the above solution, the configuration information/operator policy includes at least one of:
at least part of the second DC information;
a user device has signed a DC contract or has been authorized to use a DC capability, a DC service or a DC business;
an ID of a first device; or
an ID of a second device, in which the second device is an opposite-end device relative to the first device.

In the above solution, the terminal/network capability information includes at least one of:
information on whether a network and/or a device supports a DC capability and/or a DC capability list; or
information on whether a network and/or a device supports a DC service/business, and/or a DC service/business list;
in which the network and/or the device includes at least one of: a first device, a first network, a second device, or a second network, in which the first network is a network where the first device is located, the second device is an opposite-end device relative to the first device, and the second network is a network where the second device is located.

In the above solution, the method further includes: sending by the first network function, a third message to the first network device, in which the third message includes at least one of:
first indication information on whether to establish a first channel;
second indication information on whether to process the second message;
a first policy on how to establish a first channel;
a second policy on how to process a first channel establishment request; or
the processing indication/policy information;
the processing indication/policy information, the first policy or the second policy includes at least one of following processing ways for a DC, a DC media stream, a DC media description or a DC establishment request of terminating, forwarding, newly establishing/initially establishing/originating.

In the above solution, the method further includes: sending by the first network function, an eighth message to a second network function, in which the eighth message is configured to perform at least one of:
indicating the second network function to set up or reserve DC media resources; or
completing media negotiation with a calling party and/or a called party.

In the above solution, the eighth message includes second information, and the second information includes at least one of:
third indication information for indicating the second network function to set up or reserve DC media resources;
the processing indication/policy information; or
information of the first network function.

In the above solution, the eighth message further includes third information, and the third information includes at least one of:
first indication information on whether to establish a first channel;
second indication information on whether to process the second message;
a first policy on how to establish a first channel;
a second policy on how to process a first channel establishment request; or
the processing indication/policy information;
the processing indication/policy information, the first policy or the second policy includes at least one of following processing ways for a DC, a DC media stream, a DC media description or a DC establishment request of terminating, forwarding, newly establishing/initially establishing/originating.

In the above solution, the method further includes: receiving by the first network function, negotiated third DC information and/or DC media resource information from the first network device.

In the above solution, the method further includes: receiving by the first network function, a ninth message from the second network function, in which the ninth message includes at least negotiated third DC information and/or DC media resource information.

In the above solution, the DC media resource information includes at least one of:
an IP address or a port number of the second network function.

In the above solution, the third DC information includes at least one of:
negotiated DC information that a DC is established with a first device or a first network;
DC information that a DC is to be established with a second device or a second network;
negotiated DC information; or
DC information to be negotiated.

In the above solution, the method further includes: sending by the first network function, a sixth message to the first network device, in which the sixth message includes at least the negotiated third DC information and/or DC media resource information.

In the above solution, the action performed by the first network function based on the second message includes at least one of:
in case that a first network does not support a DC capability, determining to establish at least one of: a DC between a first device and a second network, a DC between a second device and a second network, or a DC between a first device and a second device;
in case that a second network does not support a DC capability, determining to establish at least one of: a DC between a first device and a first network, a DC between a second device and a first network, or a DC between a first device and a second device;
in case that neither a first network nor a second network supports a DC capability, not establishing a DC;
in case that a first device does not support a DC capability, determining to establish a DC between a second device and a first network, and/or a DC between a second device and a second network;
in case that a second device does not support a DC capability, determining to establish a DC between a first device and a first network, and/or a DC between a first device and a second network;
in case that neither a first device nor a second device supports DC capability, not establishing a DC;
in case that a DC establishment request aims at a DC media function of a first network, terminating the DC establishment request; or
in case that a DC establishment request aims at a DC media function of a second network or a second device, transparently transmitting/forwarding, or initializing/newly establishing the DC establishment request;
in which the first network is a network where the first device is located, the second device is an opposite-end device relative to the first device, and the second network is a network where the second device is located.

In the above solution, the first channel includes at least one of:
a Bootstrap DC or an Application DC.

In a third aspect, the embodiments of the present disclosure provide a method for information processing. The method includes:
receiving by a second network function, a fourth message from a first network device, or receiving by a second network function, an eighth message from a first network function; and
sending by the second network function, a fifth message to the first network device based on the fourth message, or sending by the second network function, a ninth message to the first network function based on the eighth message; in which the fifth message and the ninth message include at least negotiated third DC information and/or DC media resource information.

In the above solution, the fourth message is configured to perform at least one of:
indicating the second network function to set up or reserve DC media resources;
or completing media negotiation with a calling party and/or a called party;
and/or in which the eighth message is at least configured to perform at least one of:
indicating the second network function to set up or reserve DC media resources;
or completing media negotiation with a calling party and/or a called party.

In the above solution, the eighth message includes second information, and the second information includes at least one of:
third indication information for indicating the second network function to set up or reserve DC media resources;
processing indication/policy information; or
information of the first network function.

In the above solution, the eighth message further includes third information, and the third information includes at least one of:
first indication information on whether to establish a first channel;
second indication information on whether to process the second message;
a first policy on how to establish a first channel;
a second policy on how to process a first channel establishment request; or
the processing indication/policy information;
the processing indication/policy information, the first policy or the second policy includes at least one of following processing ways for a DC, a DC media stream, a DC media description or a DC establishment request of terminating, forwarding, newly establishing/initially establishing/originating.

In the above solution, the fourth message includes at least one of information:
third indication information for indicating the second network function to set up or reserve DC media resources;
processing indication/policy information; or
information of the first network function.

In the above solution, the DC media resource information includes at least one of:
an IP address or a port number of the second network function.

In the above solution, the third DC information includes at least one of:
negotiated DC information that a DC is established with a first device or a first network;
DC information that a DC is to be established with a second device or a second network;
negotiated DC information; or
DC information to be negotiated.

In a fourth aspect, the embodiments of the present disclosure provide an apparatus for information processing. The apparatus includes a first communication unit, and a first processing unit.

The first communication unit is configured to receive a first message, in which the first message includes at least first DC information.

The first processing unit is configured to determine whether to send a second message to a first network function based on at least one of subscription information, user contract information, configuration information, or terminal/network capability information.

In a fifth aspect, the embodiments of the present disclosure provide an apparatus for information processing. The apparatus includes a second communication unit, and a second processing unit.

The second communication unit is configured to receive a second message from a first network device.

The second processing unit is configured to perform based on the second message, at least one action of:
determining whether to establish a first channel;
determining how to establish a first channel;
determining how to process a first channel establishment request; or
determining processing indication/policy information.

In a sixth aspect, the embodiments of the present disclosure provide an apparatus for information processing. The apparatus includes a first receiving unit, and a first sending unit.

The first receiving unit is configured to receive a fourth message from a first network device, or receive an eighth message from a first network function via a second network function.

The first sending unit is configured to send a fifth message to the first network device based on the fourth message, or send a ninth message to the first network function based on the eighth message, in which the fifth message and the ninth message include at least negotiated third DC information and/or DC media resource information.

In a seventh aspect, the embodiments of the present disclosure provide a computer-readable storage medium having a computer program stored thereon which, when executed by a processor, implements the steps of the method described in the first aspect, the second aspect, or the third aspect of the embodiments of the present disclosure.

In an eighth aspect, the embodiments of the present disclosure provide a communication device, including a processor, and a memory for storing a computer program executable on the processor, when the computer program is executed, the processor implements steps of the method described in the first aspect, the second aspect, or the third aspect of the embodiments of the present disclosure.

In the method and apparatus for information processing, the communication device and the storage medium according to the embodiments of the present disclosure, the first network device receives the first message that includes at least first DC information, and determines whether to send the second message to the first network function based on at least one of subscription information, user contract information, configuration information, or terminal/network capability information. The first network function receives the second message from the first network device, performs, based on the second message, at least one action of: determining whether to establish the first channel; determining how to establish the first channel; determining how to process the first channel establishment request; or determining processing indication/policy information. The technical solutions in the embodiments of the present disclosure realizes a network architecture and an interaction mechanism of separating a control plane from a media plane based on the DC.

### BRIEF DESCRIPTION OF THE DRAWINGS

FIG. 1a and FIG. 1b are diagrams of network architectures to which a method for information processing is applied according to embodiments of the present disclosure.
FIG. 2 is a first flowchart of a method for information processing according to embodiments of the present disclosure.
FIG. 3 is a second flowchart of the method for information processing according to embodiments of the present disclosure.
FIG. 4 is a diagram of channel establishment in the method for information processing according to embodiments of the present disclosure.
FIG. 5 is a third flowchart of a method for information processing according to embodiments of the present disclosure.
FIG. 6 is a first interaction flowchart of a method for information processing according to embodiments of the present disclosure.
FIG. 7 is a second interaction flowchart of a method for information processing according to embodiments of the present disclosure.
FIG. 8 is a third interaction flowchart of a method for information processing according to embodiments of the present disclosure.
FIG. 9 is a fourth interaction flowchart of a method for information processing according to embodiments of the present disclosure.
FIG. 10 is a fifth interaction flowchart of a method for information processing according to embodiments of the present disclosure.
FIG. 11 is a first composition structure diagram of an apparatus for information processing according to embodiments of the disclosure.
FIG. 12 is a second composition structure diagram of an apparatus for information processing according to embodiments of the disclosure.
FIG. 13 is a third composition structure diagram of an apparatus for information processing according to embodiments of the disclosure.
FIG. 14 is a composition structure diagram of a communication device according to embodiments of the disclosure.

### DETAILED DESCRIPTION

The present disclosure is further described in detail below with reference to the accompanying drawings and specific embodiments.

The technical solutions in the embodiments of the present disclosure may be applied to various communication systems, such as a Global System of Mobile communication (GSM) system, a Long Term Evolution (LTE) system or a 5G system. Optionally, the 5G system or 5G network may also be referred to as a New Radio (NR) system or a NR network.

For example, the communication system applied in the embodiments of the present disclosure may include a network device and a terminal device (also referred to as a terminal, a communication terminal, etc.). The network device may be a device that communicates with the terminal device. The network device can provide a communication coverage within a certain area and can communicate with terminals located in the area. Optionally, the network device may be a base station in each communication system, such as an evolved node B (eNB) in an LTE system, or a next generation node B (gNB) in a 5G system or a NR system.

It should be understood that a device having a communication function in a network/system in the embodiments of the present disclosure may be referred to as a communication device. The communication device may include network devices and terminals with communication functions. The network device and terminal device each may be the specific device described above, which will not be repeated here. The communication device may also include other device in the communication system, such as a network controller, a mobile management entity and other network entities, which are not limited in the embodiments of the present disclosure.

It should be understood that the terms "system" and "network" are often used interchangeably herein. The term "and/or" herein is merely a description of an association relationship of associated objects, indicating that three relationships may exist. For example, A and/or B may represent that, A exists alone, A and B exist at the same time, or B exists alone. In addition, the character "j" herein generally indicates that the previous and next associated objects are in an "or" relationship.

The terms "first", "second", etc. in the description and claims of the present disclosure are used to distinguish similar objects and are not necessarily used to describe a particular sequence or order. It should be understood that the terms used in such way are interchangeable under appropriate circumstances such that the embodiments of the disclosure described herein may be implemented in a sequence other than those illustrated or described herein, for example. In addition, the terms "include", "have" and any variations thereof are intended to cover non-exclusive inclusions. For example, a process, a method, a system, a product, or a device that includes a series of steps or elements is not necessarily limited to those steps or elements explicitly listed, but may include other steps or elements not explicitly listed or inherent to such process, method, product, or device.

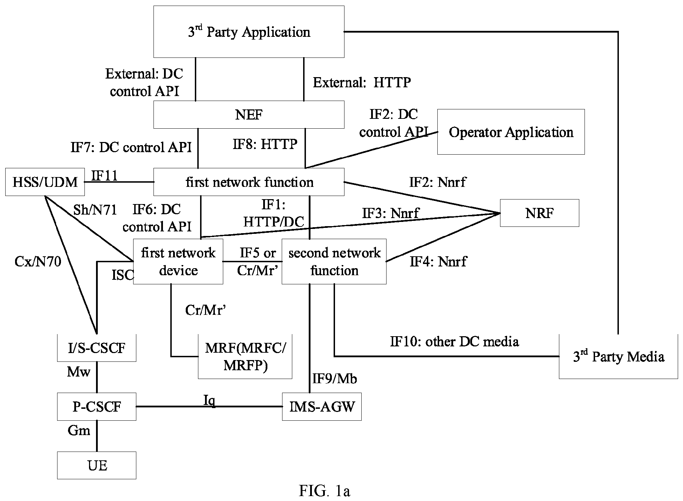

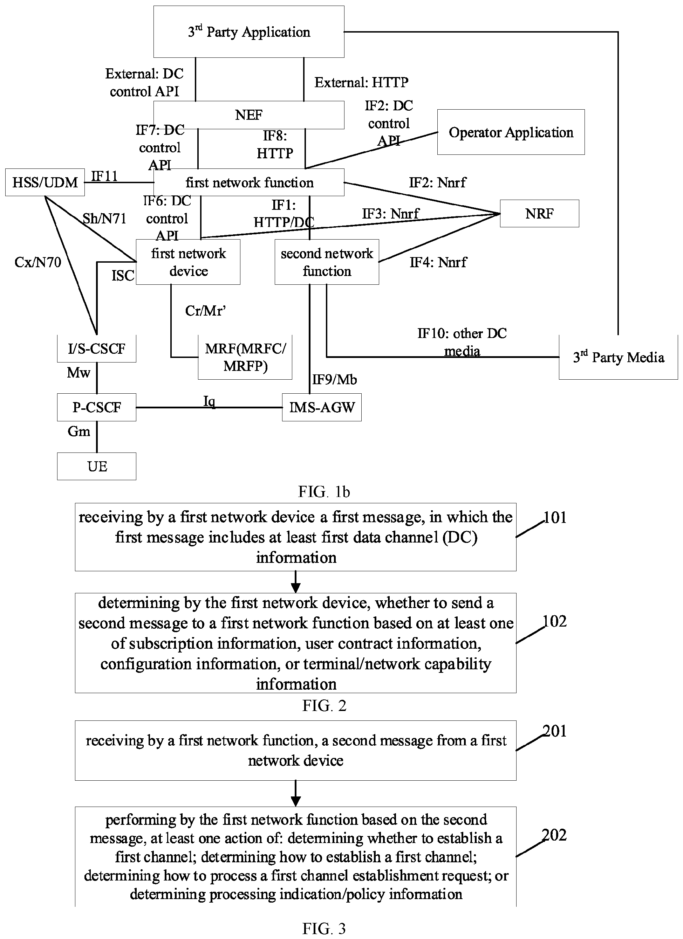

FIG. 1a and FIG. 1b are diagrams of network architectures to which a method for information processing is applied according to embodiments of the present disclosure. The difference between FIG. 1a and FIG. 1b lies in that FIG. 1a retains an interface between a first network device and a second network function, while FIG. 1b does not retain the interface between the first network device and the second network function. The interface between the first network device and the second network function is denoted as an interface (IF) 5.

As illustrated in FIG. 1a and FIG. 1b, the network architecture mainly includes a first network device, a first network function and a second network function. The first network device and the first network function communicate via IF6, and the first network function and the second network function communicate via IF1.

In various embodiments of the present disclosure, the first network device may also be referred to as a server or an application server (AS), which is a server responsible for media services or multimedia services. The first network device is mainly used for at least one of: routing or forwarding of DC-related requests or calls (routing or forwarding to the first network function), sending DC-related requests or calls to the first network function based on a subscription of the first network function, managing or negotiating of DC resources based on information sent by the first network function, routing or forwarding of DC-related requests or calls based on information sent by the first network function (routing or forwarding to a next functional module), controlling or negotiating of traditional audio/video media, etc.

Optionally, the first network device may be an IP Multimedia Subsystem (IMS) AS, a Multi Media Telephony (MMTEL) AS, a calling AS, a Session Initiation Protocol (SIP) AS, etc. The name of the first network device is not limited in this embodiment.

The first network function is used to process a control plane of a DC. The first network function is mainly used for at least one of: registering a DC media capability, processing DC related requests, interacting with the first network device to subscribe to DC related events, interacting or negotiating DC related media or data with the first network device and/or the second network function, etc.

Optionally, the first network function may be a data channel server (DCS), a data channel server-controller (DCS-C), a data channel control function (DCCF), a unified control function (UCF) or a centralized control function (CCF) or a data channel signaling function (DCSF), etc. The name of the first network function is not limited in this embodiment.

The second network function is used to process a media plane of the DC. Specifically, the second network function may be used for at least one of: processing or integration of media or data transmitted based on a DC, and forwarding after processing or integration; relaying or forwarding of media or data transmitted based on a DC, etc. The above-mentioned media or data include but are not limited to at least one of: DC-related media or data; augment reality (AR) related /extended reality (XR) related media or data; rendering-related media or data; translation related media or data, automatic speech recognition (ASR) related media or data, TTX-related media or data; audio and video media or data; playback media or data, etc. For the processing or integration of various data/media resources is for example synthesis and overlay of subtitles with audio and video, screen sharing and circle overlay & circle functions. The above-mentioned relaying or forwarding of media or data transmitted based on the DC, for example, is relaying or forwarding data/media sent from the network to the terminal, relaying or forwarding data/media sent from the terminal to the network, and so on.

Optionally, the second network function may be a new independent network function. For example, the second network function may be a data channel media (DCM), a data channel media function (DCMF), a data channel server-user (DCS-U), a data channel server-media (DCS-M), a data channel media function (DMF), a media resource function (MRF), a media resource function processor (MRFP), a unified media function (UMF) or a centralized media function (CMF), etc. The name of the second network function is not limited in this embodiment.

Optionally, the second network function may also be obtained by performing function expansion, upgrading, merging, etc. based on existing media functions in the current IMS network. The existing media functions in the above-mentioned IMS network may be, for example, a transition gateway (TrGW), a MRF or a MRFP, an IP multimedia-media gateway (IM-MGW), an IMS access gateway (IMS-AGW), etc. For example, in addition to the above names, the second network function may also be MRF or MRFP, etc. The name of the second network function is not limited in this embodiment.

Optionally, the first network function may further include a DC application repository for storing DC applications in the network, which may be built into the first network function or exist as an independent module, which is not limited in this embodiment.

FIG. 1a and FIG. 1b also include other network devices, such as a home subscriber server (HSS)/unified data management (UDM), a network exposure function (NEF) and other network devices, as well as interrogating/serving-call session control function (I/S-CSCF) and proxy-call session control function (P-CSCF) and other network devices.

The network architecture in the embodiments of the present disclosure involves a local-end device, a local-end network, an opposite-end device and an opposite-end network. The local-end network is a network where the local-end device is located, and the opposite-end network is a network where the opposite-end device is located. The local end may also be referred to as a calling side, the local-end device may also be referred to as a calling device, and the local-end network may also be referred to as a calling side network or a calling side IMS network. The opposite end may also be referred to as a remote end or a called side, the opposite-end device may also be referred to as a remote device or a called device, and the opposite-end network may also be referred to as a remote network, a called side network or a called side IMS network.

For example, the local-end device and the opposite-end device may include a user equipment (UE), a terminal, a terminal device, an end user, a mobile phone, a data channel IMS multimedia telephony server (DCMTSI), a client in the terminal, a DCMTSI client, an IMS multimedia telephony server (MTSI) client, a MTSI client in the terminal, etc.

For example, the network devices in the local-end network and the opposite-end network may include at least one of a P-CSCF, an I-CSCF, and an S-CSCF, including but not limited to the network devices listed above.

A brief description of the Bootstrap DC, Application DC, and DC application involved in the embodiments of the present disclosure is as follows.

Bootstrap DC: the data channel whose data channel stream ID is lower than 1000. It uses the hyper text transfer protocol (HTTP) to transfer data channel applications between the UE and the network.

Application DC: the data channel whose data channel stream ID starts from 1000. It is used to transfer interactive data of data channel applications between the UEs or between the UE and the network).

DC Application: the HTML web content includes JavaScript(s), and optionally image(s) and style sheet(s). It is accessible at the HTTP root("/")URL through a bootstrap data channel and describes the graphical user interface and the interactive service logic.

The following embodiments of the present disclosure are proposed based at least on the above network architecture.

An embodiment of the present disclosure provides a method for information processing, which is applied to a first network device. FIG. 2 is a flowchart of a method for information processing according to embodiments of the present disclosure. As illustrated in FIG. 2, the method includes the following steps at 101-102.

At 101, a first network device receives a first message, in which the first message includes at least first DC information.

At 102, the first network device determines whether to send a second message to the first network function based on at least one of subscription information, user contract information, configuration information, and terminal/network capability information.

Optionally, the second message includes second DC information, and the second DC information is at least part of the first DC information.

In this embodiment, the first message comes from the first device. The first device may be a local-end device or an opposite-end device. When the first device is a local-end device, the first network device (specifically, the network device in the local-end network) can receive first information from the first device through the local-end network. When the first device is an opposite-end device, the first network device (specifically, the network device in the opposite-end network) can receive first information from the first device through the opposite-end network. The local-end network may also be referred to as a first network, and the opposite-end network may also be referred to as a second network. In each embodiment of the present disclosure, the first network is taken as the local-end network and the second network is taken as the opposite-end network for illustration.

The DC described in each embodiment of the present disclosure includes at least one of: a Bootstrap DC and an Application DC. The Bootstrap DC may also be referred to as a guiding DC, and the Application DC may also be referred to as a service DC, and these names are not limited in this embodiment.

In some optional embodiments, the first message is a SIP invite (request) message, a DC SDP offer (or SDP offer) or a first DC request message.

In this embodiment, the first message may adopt a SIP message format. The first message may also be called a SIP message, an invite message, an invite request message, a re-invite message, a re-invite request message, an UPDATE message, an UPDATE request message, etc. The name of the message is not limited in this embodiment.

The call request in each embodiment of the present disclosure may also be referred to as a SIP request, a calling request, an INVITE or an INVITE message, a SIP INVITE request, a SIP INVITE request, a re-INVITE or re-INVITE message, a SIP re-INVITE request, an UPDATE or UPDATE message, a SIP UPDATE request, a DC call request, a call request, a calling request, a SIP UPDATE, an initial SPF, or an updated SDP. Unless otherwise specified, the above message names may be equivalent or replaceable.

On the other hand, the first message may also be called a request message (which may be recorded as a first request message), a DC request message (which may be recorded as a first DC request message), a call request message, a DC call request message, a call event, a DC call event, etc. The name of the message is not limited in this embodiment.

In some optional embodiments, the first DC information includes at least one of:
DC media description information;
DC identifier (ID) information;
label information;
DC capability information or information indicating whether a DC is supported by a device or a user;
an ID of a first device;
an ID of a second device, in which the second device is an opposite-end device relative to the first device;
audio information and/or video information; or
a DC establishment request.

In this embodiment, the DC media description information is used to describe media related information of the DC. Optionally, the DC media description information includes at least one of:
the DC ID information; or
the label information.

In the embodiments of the present disclosure, the DC ID information and/or label information may be carried in the DC media description information, or may also be carried in the first DC information.

In this embodiment, the DC ID information may include at least one of: a DC ID, a Stream ID, a DC Stream ID, a Bootstrap DC ID, a bootstrap stream ID, an Application DC ID, an application stream ID, etc. The name of the DC ID is not limited in this embodiment.

In this embodiment, the label information indicates an establishment direction and/or intention of a DC or stream, such as a caller or a callee, or indicates a type of DC. For example, the label information corresponds to a Bootstrap DC or an Application DC. The label information may include at least one of: a DC label, a stream label, a DC stream label, or the like. The name of the label is not limited in this embodiment.

Optionally, the DC media description information includes one or more pieces of DC media description information. For example, when the first DC information includes the DC media description information, the DC media description information may include one or more pieces of DC media description information. For example, the one or more pieces of DC media description information may include at least one of:
first DC media description information, which includes: a DC ID 0 (for example, Stream ID 0) and/or a label indicating a caller; or
second DC media description information, which includes: a DC ID 100 (eg, Stream ID 100) and/or a label indicating a caller.

Optionally, the first DC information includes one or more pieces of DC media description information. For example, when the first DC information includes the DC media description information, the first DC information may include one or more pieces of DC media description information. For example, the one or more pieces of DC media description information may include at least one of:
first DC media description information, which includes: a DC ID 0 (for example, Stream ID 0) and/or a label indicating a caller; or
second DC media description information, which includes: a DC ID 100 (eg, Stream ID 100) and/or a label indicating a caller.

In this embodiment, the first DC information may be carried by the DC SDP offer in the first message. It may be understood that after the first network device receives the first message, the first network device can determine that the first DC message is detected if it detects that the first message includes the DC SDP offer.

In this embodiment, the DC ID information and/or label information may be carried via a dcmap field in the first message.

In some optional embodiments, the DC capability information includes at least one of:
DC capability;
DC Capability List;
DC Service/Application; or
DC Service/Application List.

For example, the DC capability information may be carried via a webrtc-datachannel field in the first message.

In this embodiment, the information indicating whether the DC is supported by the device or the user may be for example indication information. For example, a designated indication bit in the first message indicates whether he DC is supported by the device or the user. If the indication bit is 1, it may indicate that the DC is supported by the device or the user. If the indication bit is 0, it may indicate that the DC is not supported by the device or the user. Of course, the embodiments of the present disclosure are not limited to the above examples.

In this embodiment, the ID of the first device can uniquely identify the first device. For example, the ID of the first device may include for example at least one of: a mobile subscriber international ISDN number (MSISDN), a calling number, and an international mobile subscriber identity (IMSI). Of course, the ID of the first device in this embodiment is not limited to the above examples, and other IDs that can uniquely identify the device may also be within the protection scope of the embodiments of the present disclosure.

Correspondingly, the ID of the second device may include, for example, at least one of: the MSISDN, the calling number, the IMSI, or the like.

In this embodiment, the first DC information may include audio and/or video information. In other embodiments, the first message may include the first DC information and the audio and/or video information. For example, in one manner, the first message includes the first DC information, and the first DC information includes the audio and/or video information. In another manner, the first message may include the first DC information and the audio and/or video information.

In some optional embodiments of the present disclosure, the first message carrying the first DC information may indicate a DC establishment request, or the DC media description information in the first DC information may indicate a DC establishment request, or the above-mentioned label information may indicate a DC establishment request, or the first message includes information for indicating a DC establishment request, or the first DC information may include information for indicating a DC establishment request, or the first DC information may include a DC establishment request.

In some optional embodiments, the DC establishment request includes at least one of: the DC ID information; or the label information.

In this embodiment, the first network device determines whether to send a second message to the first network function based on the first message and at least one of the subscription information, the user contract information, the configuration information or the terminal/network capability information. It may be understood that the first network device determines whether to send the second message to the first network function based on information carried in the first message and at least one of the subscription information, the user contract information, the configuration information or the terminal/network capability information as a decision condition.

The second DC information included in the second message is at least part of the first DC information, and the content included in the second DC information may refer to the specific description of the above-mentioned first DC information, which will not be repeated here.

In this embodiment, the user contract information may also be referred to as user contract data, contract information, contract attributes, a user's profile, a service/business profile, registration information, user subscription data, user data, etc., the name of which is not limited in this embodiment. The user contract information identifies the DC capability, the DC service/business that the device user has subscribed, or identifies the DC capability, the DC service/business that the device user has been authorized to use.
1. DC as a capability is contracted, which may include one or more of:
   1) the DC capability is regarded as a capability that requires authorization from the network side to use; and
   2)whether the user contract information contains the DC capability and/or the DC capability list is used as a basis for judging whether the DC capability is contracted;
2. DC as a service/business is contracted, which may include one or more of:
   1) DC is regarded as a service/business (i.e., DC service/business) that requires authorization from the network side to use;
   2) DC services/businesses are regarded as a subset of MMTEL services/businesses, similar to multi-party calls. The DC services/businesses can only be used when the MMTEL services include the DC services/businesses; and
   3) The DC services/businesses shall be independent from the MMTEL services/businesses. The DC can only be used when the user contract information includes independent DC services/businesses.

In some optional embodiments, the user contract information includes at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

Optionally, the user contract information may be obtained by the first network device during a registration process of the first device or device user, or may also be obtained by the first network device from other network devices (such as HSS) as needed. In case that the first network device obtains the user contract information as needed, the first DC information needs to include user information (such as the ID of the first device) so that the first network device can obtain the user contract information corresponding to the first device.

In this embodiment, the subscription information identifies that the first network function makes a DC-related subscription (such as a subscription to a DC event or a subscription to a DC call, etc.) to the first network device.

In some optional embodiments, the subscription information includes at least one of:
at least part of the first DC information;
information that a user device has signed a DC contract or has been authorized to use a DC capability, a DC service or a DC business;
an ID of a first device; or
an ID of a second device.

The specific explanation for the ID of the first device and the ID of the second device may be referred to the descriptions in the above embodiments, which will not be repeated here.

For example, if the subscription information includes the at least part of the information in the first DC information, and the at least part of the information refers to designated information in the DC information subscribed by the first network function, then the first network function detects that the first DC information carried in the first message includes the above-mentioned designated information. This indicates that the subscription condition is matched, the first network device determines to send the second message to the first network function. If the subscription information includes the information that the device user has signed the DC contract or has been authorized to use the DC capability, the DC service or the DC business, after the first network device receives the first message from the first device, the first network device determines based on the contract information that, the device user of the first device has signed the DC contract or has been authorized to use the DC capability, the DC service or the DC business. This indicates that the subscription condition is matched. If the subscription information includes the ID of the first device and/or the ID of the second device, after the first network device receives the first message from the first device, the first network device determines that the ID of the first device matches the ID of the first device in the subscription information, or determines that the ID of the opposite-end device (i.e., the ID of the second device) that the first message requests to call matches the ID of the second device in the subscription information. This indicates that the subscription condition is matched.

In this embodiment, the configuration information may also be referred to as local configuration information, an operator policy, etc., indicating that the first DC information complies with or matches a local configuration and/or an operator policy.

In some optional embodiments, the configuration information includes at least one of:
at least part of the first DC information;
information that a user device has signed a DC contract or has been authorized to use a DC capability, a DC service or a DC business;
an ID of a first device; or
an ID of a second device.

For example, if the configuration information includes the at least part of the first DC information, for example if a designated DC is locally configured or an operator allows establishment of a designated DC, and the first DC information includes the above-mentioned designated DC, then the subscription condition may be matched and the first network device determines to send the second message to the first network function. If the configuration information includes the information that the device user has signed the DC contract or has been authorized to use the DC capability, the DC service or the DC business, after the first network device receives the first message from the first device, the first network device determines based on the contract information that the device user of the first device has signed the DC contract or has been authorized to use the DC capability, the DC service or the DC business. This indicates that the configuration information is matched. If the configuration information includes the ID of the first device and/or the ID of the second device, after the first network device receives the first message from the first device, the first network device determines that the ID of the first device matches the ID of the first device in the configuration information, or determines that the ID of the opposite-end device (i.e., the ID of the second device) that the first message requests to call matches the ID of the second device in the configuration information. This indicates that the configuration information is matched.

In this embodiment, the terminal/network capability information may also be referred to as service/business information supported by the terminal/network. In some optional embodiments, the terminal/network capability information includes at least one of:
information on whether a network and/or a device supports a DC capability and/or a DC capability list; or
information on whether a network and/or a device supports a DC service/business, and/or a DC service/business list.

The network and/or the device includes at least one of: a first device, a first network, a second device, or a second network. The first network is a network where the first device is located, the second device is an opposite-end device relative to the first device, and the second network is a network where the second device is located.

Optionally, the capability information and/or service information of the local-end device (such as the first device) and/or the local-end network (such as the first network) may be obtained by the first network device during the registration process of the first device or the device user, or may also be obtained by the first network device from other network devices (such as HSS) as needed. In the case that the first network device obtains the user contract information as needed, the first DC message needs to include the user information (such as the ID of the first device) so that the first network device can obtain the user contract information corresponding to the first device. The capability information and/or service information of the opposite-end device (such as the second device) and/or the opposite-end network (such as the second network) may be obtained based on a report or subscription mechanism (establishing NNI information reporting).

In some optional embodiments of the present disclosure, the method further includes: in case that the first network device determines to send the second message to the first network function, sending by the first network device, the second message to the first network function. The second message is used by the first network function to determine whether to establish a first channel and/or to determine processing policy information for the second message.

In some optional embodiments, the second message carrying the second DC information may indicate a DC establishment request, or the DC media description information in the second DC information may indicate a DC establishment request, or the label information in the second DC information may indicate a DC establishment request, or the second message includes information for indicating a DC establishment request, or the second DC information may include information for indicating a DC establishment request, or the second DC information may include a DC establishment request. In this case, the second message may also be used by the first network function to determine a processing policy for the DC establishment request.

In some optional embodiments, the second message is a notification message or a second DC request message. For example, the second message may be an event notification, a call event notification, a DC event notification, a DC call event notification, a call request, a DC call request, etc. The name of the second message is not limited in this embodiment.

In some optional embodiments of the present disclosure, the method further includes: receiving by the first network device, a third message from the first network function. The third message includes at least one of:
first indication information on whether to establish a first channel;
second indication information on whether to process the second message;
a first policy on how to establish a first channel;
a second policy on how to process a first channel establishment request; or
processing indication/policy information.

The processing indication/policy information, the first policy or the second policy includes at least one of following processing ways for a DC, a DC media stream, a DC media description or a DC establishment request: terminating, forwarding, newly establishing /initially establishing /originating.

In this embodiment, after the first network device sends the second message to the first network function, the first network function determines whether to establish the first channel and/or determines the processing policy information for the second message. Furthermore, the first network device receives the third message from the first network function. The third information indicates the first network device to perform SDP/DC SDP processing based on a decision or policy of the first network function.

For example, the third message may also be called a session request, session information, a session indication, a control request, control information, a control indication, a DC session request, a DC session indication, DC session information, a DC control request, DC session information, a DC session indication, a call control request, call control information, a call control indication, etc. The name of the third message is not limited in this embodiment.

The above-mentioned processing policy information for the second message may include a processing policy for the DC establishment request.

In some optional embodiments of the present disclosure, the method further includes: sending by the first network device, a fourth message to a second network function. The fourth message is configured to perform at least one of:
indicating the second network function to set up or reserve DC media resources; or
completing media negotiation with a calling party and/or a called party.

In this embodiment, the fourth message may also be called a request/information/indication for performing at least one of DC resource reservation, DC resource allocation, DC establishment, DC media negotiation, DC media resource negotiation, and DC media resource reservation, and/or, the first message may also be called a request/information/indication for performing at least one of establishing a DC, establishing a DC SDP, and establishing a DC SDP OFFER.

Optionally, the fourth message includes at least one of information:
third indication information for indicating the second network function to set up or reserve DC media resources;
the processing indication/policy information which includes at least one of following processing ways for a DC, a DC media stream, a DC media description or a DC establishment request: terminating, forwarding, newly establishing /initially establishing /originating;
information of the first network function.

In this embodiment, information negotiated between the first network device and the second network function includes but is not limited to at least one of:
resources for establishing a DC with the first device and/or the first network, such as a SDP OFFER, a SDP ANSWER, an IP address and a port number of the second network function, etc.; or
resources for establishing a DC with the second device and/or the second network, such as a SDP OFFER, a SDP ANSWER, an IP address and a port number of the second network function, etc.

In this embodiment, the information of the first network function includes but is not limited to at least one of:
an address of the first network function, DC media subscription information, or information for indicating the second network function to obtain DC application data from the first network function based on the information.

In some optional embodiments of the present disclosure, the method further includes: receiving by the first network device, a fifth message from the second network function. The fifth message includes at least negotiated third DC information and/or DC media resource information.

In this embodiment, the fifth message may also be referred to as a response message corresponding to the fourth message.

In some optional embodiments, the method further includes: sending by the first network device, the third DC information and/or DC media resource information to the first network function.

The third DC information and/or DC media resource information may be sent to the first network function via a message, an indication or information.

In this embodiment, after obtaining the negotiated third DC information and/or DC media resource information from the second network function, the first network device sends the third DC information and/or DC media resource information to the first network device to notify the first network function of the negotiated resources.

In some optional embodiments of the present disclosure, the method further includes: receiving by the first network device, a sixth message from the first network function. The sixth message includes at least negotiated third DC information and/or DC media resource information.

This embodiment is applicable to a situation where the first network function and the second network function directly interact to negotiate media resources. The first network function can directly obtain the negotiated third DC information and/or DC media resource information from the second network function, and the first network function then sends the negotiated third DC information and/or DC media resource information to the first network device via the sixth message.

Optionally, the DC media resource information includes at least one of: an IP address and a port number of the second network function.

Optionally, the third DC information includes at least one of:
negotiated DC information that a DC is established with a first device or a first network;
DC information that a DC is to be established with a second device or a second network;
negotiated DC information; or
DC information to be negotiated.

The above-mentioned DC information includes, for example, negotiated SDP OFFER and/or SDP ANSWER, and/or SDP OFFER and/or SDP ANSWER to be negotiated.

For example, the negotiated DC information that the DC is established with the first device or the first network may be, for example, negotiated SDP OFFER or DC information (such as DC ID information and/or label information, etc.) that the DC, the Bootstrap DC or the Application DC is established with the first device or the first network. The DC information that the DC is to be established with the second device or the second network may be, for example, negotiated SDP OFFER or DC information (such as DC ID information and/or label information, etc.) that the DC, the Bootstrap DC or the Application DC is to be established with the second device or the second network. The DC information to be negotiated or after negotiation may include, for example, DC ID information and/or label information, and the like. The DC ID information and/or label information may be carried via the dcmap field in the message.

In some optional embodiments of the present disclosure, the method further includes: sending by the first network device, a seventh message to a second network device. The second network device is a device of a first network where a first device is located.

The seventh message includes at least one of:
DC media resource information;
the third DC information; or
information of the second network function.

In this embodiment, the second network device may also be a network device of the local-end network or the first network, or may also be a device of the opposite-end network or the second network, such as an I/S-CSCF, a P-CSCF, or other network device.

The name of the seventh message can specifically refer to the name of the above-mentioned first message, which will not be repeated here.

In some optional embodiments of the present disclosure, the method further includes: in case that the first network device determines not to send the second message to the first network function, performing at least one of:
determining first information, in which the first information is obtained by removing the first DC information from information carried in the first message; or
sending the first information to a second network device, in which the second network device is a device of a first network where a first device is located.

In this embodiment, if the first network device determines not to send the second message to the first network function, that is, the first message does not meet a condition for routing to the first network function, the first network device can remove the first DC information from the information carried by the first message to obtain the first information, and/or forward a message carrying the first information to the second network device. It may be understood that the first network device can at least obtain audio and/or video information by removing the first DC information from the information carried by the first message. Then the message forwarded by the first network device to the second network device carries the above audio and/or video information.

Based on the above embodiments, the embodiments of the present disclosure also provide a method for information processing. FIG. 3 is a second flowchart of the method for information processing according to embodiments of the present disclosure. As illustrated in FIG. 3, the method includes the following steps at 201-202.

At 201, a first network function receives a second message from a first network device;

At 202, the first network function performs, based on the second message, at least one action of: determining whether to establish a first channel; determining how to establish a first channel; determining how to process a first channel establishment request; or determining processing instructions/policy information.

In some optional embodiments, the first channel is a DC, and the first channel or DC includes at least one of: a Bootstrap DC and an Application DC.

In some optional embodiments, the second message includes second DC information, and the second DC information is at least part of the first DC information from the first device.

In some optional embodiments, the second message is a notification message or a second DC request message.

In some optional embodiments, the second DC information includes at least one of:
DC media description information;
DC ID information;
label information;
DC capability information or information indicating whether the DC is supported by a device or a user;
an ID of the first device;
an ID of a second device, in which the second device is an opposite-end device relative to a first device;
audio and/or video information; or
a DC establishment request.

In some optional embodiments, the DC media description information includes at least one of:
the DC ID information; or
the label information.

In some optional embodiments, the DC media description information includes one or more pieces of DC media description information.

In some optional embodiments, the first DC information includes one or more pieces of DC media description information.

In some optional embodiments, the DC capability information includes at least one of:
a DC capability;
a DC capability list;
a DC service or a DC application; or
a DC service list or a DC application list.

The DC establishment request includes at least one of:
the DC ID information; or
the label information.

In this embodiment, the same terms as those in the previous embodiments may be specifically referred to the descriptions in the previous embodiments, which will not be repeated in this embodiment.

In this embodiment, the first network device makes a decision based on the second message to determine whether to establish the first channel, how to establish the first channel, how to process the first channel establishment request, and the processing indication/policy information.

Optionally, the above-mentioned processing indication/policy information may include processing indication/policy information for a DC establishment request, and/or processing indication/policy information for DC media description information.

Optionally, the processing indication/policy information, the first policy for how to establish the first channel, or the second policy for how to process the first channel establishment request includes at least one of following processing ways for a DC, a DC media stream, a DC media description or a DC establishment request of terminating, forwarding, newly establishing/initially establishing/originating.

For example, the DC or DC media stream from the first device to the second network function of the first network is terminated. The DC or DC media stream from the first device to the second network function of the second network is forwarded. The DC or DC media stream from the second network function of the first network to the second network function of the second network is newly established or initially established or originated. The DC or DC media stream from the first network function of the first network to the second device is newly established or initially established or originated.

Optionally, the processing indication/policy information may also include processing of the audio and/or video information (e.g., forwarding or terminating / newly establishing, or other processing).

Optionally, the processing policy information for the second message (including the DC establishment request and/or the DC media description information) may include at least one of: the DC ID information; the label information, or updated DC media description information.

In some optional embodiments of the present disclosure, performing by the first network function based on the second message, at least one action of: determining whether to establish the first channel; determining how to establish the first channel; determining how to process the first channel establishment request; determining the processing indication/policy information, includes: performing by the first network function at least one of determining whether to establish the first channel; determining how to establish the first channel; determining how to process the first channel establishment request; or determining the processing indication/policy information, based on at least one of contract information, configuration information/an operator policy, terminal/network capability information, or at least part of information included in the second DC information.

In this embodiment, according to the second message, as well as at least one of contract information, configuration information/an operator policy, terminal/network capability information, or at least part of information included in the second DC information, the first network function performs at least one action of: determining whether to establish the first channel; determining how to establish the first channel; determining how to process the first channel establishment request; or determining the processing indication/policy information. It may be understood that the first network function performs the above at least one action based on the information carried in the second message, and takes as a decision condition at least one of the contract information, the configuration information/operator policy, the terminal/network capability information and at least part of the information included in the second DC information.

In this embodiment, the contract information may also be referred to as user contract data, user contract information, contract attributes, a user's profile, a service/business profile, registration information, user subscription data, user data, etc., the name of which is not limited in this embodiment. The user contract information identifies the DC capability, the DC service/business that the device user has subscribed, or identifies the DC capability, the DC service/business that the device user has been authorized to use.
1. DC as a capability is contracted, which may include one or more of:
   1) the DC capability is regarded as a capability that requires authorization from the network side to use; and
   2)whether the user contract information contains the DC capability and/or the DC capability list is used as a basis for judging whether the DC capability is contracted;
2. DC as a service/business is contracted, which may include one or more of:
   1) DC is regarded as a service/business (i.e., DC service/business) that requires authorization from the network side to use;
   2) DC services/businesses are regarded as a subset of MMTEL services/businesses, similar to multi-party calls. The DC services/businesses can only be used when the MMTEL services include the DC services/businesses; and
   3) The DC services/businesses shall be independent from the MMTEL services/businesses. The DC can only be used when the user contract information includes independent DC services/businesses.

In some optional embodiments, the contract information includes at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

Optionally, the contract information may be obtained by the first network device during a registration process of the first device or device user, or may also be obtained by the first network device from other network devices (such as HSS) as needed. In case that the first network device obtains the user contract information as needed, the first DC information needs to include user information (such as the ID of the first device) so that the first network device can obtain the user contract information corresponding to the first device.

In this embodiment, the configuration information may also be referred to as local configuration information, etc. The configuration information/operator policy indicates that the first DC information complies with or matches a local configuration and/or an operator policy.

In some optional embodiments, the configuration information/operator policy includes at least one of:
at least part of the second DC information;
information that a user device has signed a DC contract or has been authorized to use a DC capability, a DC service or a DC business;
an ID of a first device; or
an ID of a second device, in which the second device is an opposite-end device relative to the first device.

For example, if a designated DC is locally configured or an operator allows establishment of a designated DC, the first network function may determine to establish the DC and/or determine how to establish the DC. For another example, after receiving the DC call event notification, the first network function determines how to process a policy for guiding the DC establishment request according to the DC call event notification and/or relevant parameters in the operator policy.

In this embodiment, the terminal/network capability information may also be referred to as service/business information supported by the terminal/network. In some optional embodiments, the terminal/network capability information includes at least one of:
information on whether a network and/or a device supports a DC capability and/or a DC capability list; or
information on whether a network and/or a device supports a DC service/business, and/or a DC service/business list.

The network and/or device includes at least one of: a first device, a first network, a second device, and a second network. The first network is a network where the first device is located, the second device is an opposite-end device relative to the first device, and the second network is a network where the second device is located.

In an optional embodiment of the present disclosure, the method further includes: sending by the first network function, a third message to the first network device. The third message includes at least one of:
first indication information on whether to establish a first channel;
second indication information on whether to process the second message;
a first policy on how to establish a first channel;
a second policy on how to process a first channel establishment request; or
the processing indication/policy information.

The processing indication/policy information, the first policy or the second policy includes at least one of following processing ways for a DC, a DC media stream, a DC media description or a DC establishment request: terminating, forwarding, newly establishing /initially establishing /originating.

Optionally, the processing policy information for the second message may include processing policy information for the DC establishment request and/or processing policy information for the DC media description information. Then, the second indication information on whether to process the second message may include second indication information on whether to process the DC establishment request and/or the DC media description information.

The processing instruction/policy information, the first policy or the second policy may include at least one of: the DC ID information; the label information, or updated DC media description information.

In another optional embodiment of the present disclosure, the method further includes: sending by the first network function, an eighth message to the second network function, in which the eighth message is at least configured to perform at least one of:
indicating the second network function to set up or reserve DC media resources; or
completing media negotiation with a calling party and/or a called party.

Optionally, the eighth message includes second information, and the second information includes at least one of:
third indication information for indicating the second network function to set up or reserve DC media resources;
the processing indication/policy information; or
information of the first network function.

Optionally, the eighth message further includes third information, and the third information includes at least one of:
first indication information on whether to establish a first channel;
second indication information on whether to process the second message;
a first policy on how to establish a first channel;
a second policy on how to process a first channel establishment request; or
the processing indication/policy information.

The processing policy information, the first policy or the second policy includes at least one of following processing ways for a DC, a DC media stream, a DC media description or a DC establishment request of terminating, forwarding, newly establishing/initially establishing/originating.

In some optional embodiments of the present disclosure, the method further includes: receiving by the first network function, negotiated third DC information and/or DC media resource information from the first network device.

In some optional embodiments of the present disclosure, the method further includes: receiving by the first network function, a ninth message from the second network function, in which the ninth message includes at least negotiated third DC information and/or DC media resource information.

Optionally, the DC media resource information includes at least one of: an IP address and a port number of the second network function.

Optionally, the third DC information includes at least one of:
negotiated DC information that a DC is established with a first device or a first network;
DC information that a DC is to be established with a second device or a second network;
negotiated DC information; or
DC information to be negotiated.

In some optional embodiments of the present disclosure, the method further includes: sending by the first network function, a sixth message to the first network device, in which the sixth message includes at least negotiated third DC information and/or DC media resource information.

In some optional embodiments of the present disclosure, the method further includes: sending by the first network function, a tenth message to the second network function, in which the tenth message includes information of the first network function and/or DC media subscription information.

In some optional embodiments of the present disclosure, the action performed by the first network function based on the second message includes at least one of:
in case that a first network does not support a DC capability, determining to establish at least one of: a DC between a first device and a second network, a DC between a second device and a second network, or a DC between a first device and a second device;
in case that a second network does not support a DC capability, determining to establish at least one of: a DC between a first device and a first network, a DC between a second device and a first network, or a DC between a first device and a second device;
in case that neither a first network nor a second network supports a DC capability, not establishing a DC;
in case that a first device does not support a DC capability, determining to establish a DC between a second device and a first network, and/or a DC between a second device and a second network;
in case that a second device does not support a DC capability, determining to establish a DC between a first device and a first network, and/or a DC between a first device and a second network;
in case that neither a first device nor a second device supports a DC capability, not establishing a DC;
in case that a DC establishment request aims at a DC media function of a first network, terminating the DC establishment request; or
in case that a DC establishment request aims at a DC media function of a second network or a second device, transparently transmitting/forwarding, or initializing/newly establishing the DC establishment request;
in which the first network is a network where the first device is located, the second device is an opposite-end device relative to the first device, and the second network is a network where the second device is located.

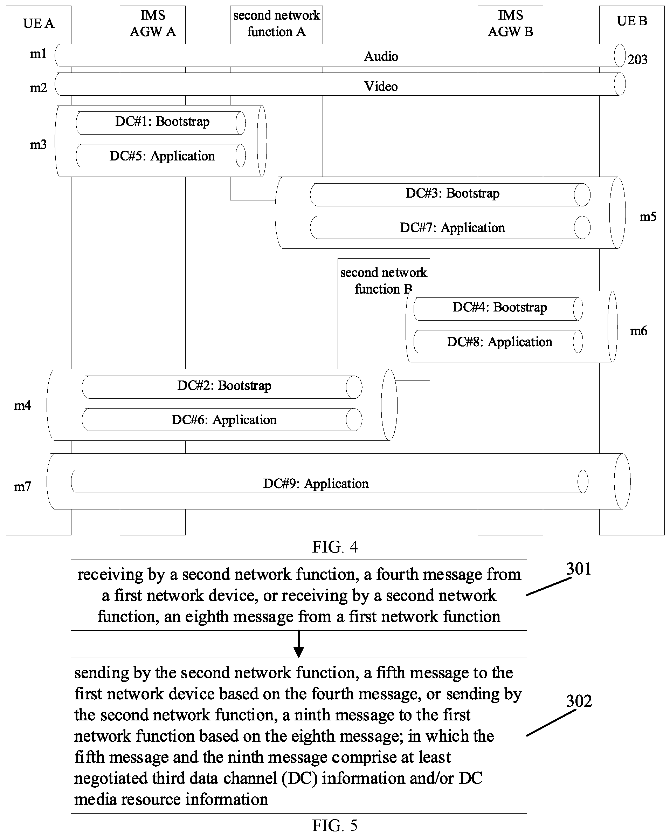

In this embodiment, the action performed by the first network function may be determined based on at least one of the above items, which may be explained in conjunction with FIG. 4 and Table 1.

FIG. 4 is a diagram of channel establishment in the method for information processing according to embodiments of the present disclosure. As illustrated in FIG. 4, assuming that UE A is a local-end device, UE B is an opposite-end device, the second network function A is the second network function of the local-end network, and the second network function B is the second network function of the opposite-end network, then m1 indicates audio information may be transmitted between UE A and UE B; m2 indicates video information may be transmitted between UE A and UE B; m3 indicates that a DC is established between UE A and the second network function A; m4 indicates that a DC is established between UE A and the second network function B; m5 indicates that a DC is established between UE B and the second network function A; m6 indicates that a DC is established between UE B and the second network function B; m7 indicates that a DC is established between UE A and UE B.

**Table 1**

| ID | Media Path | Media Description | Data Channel Type |
|---|---|---|---|
| 1 | Local-end UE <--> Local-end Network | m3 | Bootstrap DC and Application DC |
| | | m6 | |
| 2 | Local-end UE <--> opposite-end network | m4 | Bootstrap DC and Application DC |
| | | m5 | |
| 3 | Local-end UE <--> opposite-end UE | m7 | Application DC |

Based on the above embodiments, the embodiments of the present disclosure also provide a method for information processing. FIG. 5 is a third flowchart of a method for information processing according to embodiments of the present disclosure. As illustrated in FIG. 5, the method includes the following steps at 301-302.

At 301, a second network function receives a fourth message from a first network device, or a second network function receives an eighth message from a first network function;

At 302, the second network function sends a fifth message to the first network device based on the fourth message, or the second network function sends a ninth message to the first network function based on the eighth message. The fifth message and the ninth message include at least negotiated third DC information and DC media resource information.

In some optional embodiments, the fourth message is configured to perform at least one of:
indicating the second network function to set up or reserve DC media resources; or
completing media negotiation with a calling party and/or a called party; and/or
the eighth message is at least configured to perform at least one of:
   indicating the second network function to set up or reserve DC media resources; or
   completing media negotiation with a calling party and/or a called party.

In some optional embodiments, the eighth message includes second information, and the second information includes at least one of:
third indication information for indicating the second network function to set up or reserve DC media resources;
the processing indication/policy information; or
information of the first network function.

In some optional embodiments, the eighth message further includes third information, and the third information includes at least one of:
first indication information on whether to establish a first channel;
second indication information on whether to process the second message;
a first policy on how to establish a first channel;
a second policy on how to process a first channel establishment request; or
the processing indication/policy information;

The processing indication/policy information, the first policy or the second policy includes at least one of following processing ways for a DC, a DC media stream, a DC media description or a DC establishment request of terminating, forwarding, newly establishing/initially establishing/originating.

In some optional embodiments, the fourth message includes at least one of:
third indication information for indicating the second network function to set up or reserve DC media resources;
the processing indication/policy information; or
information of the first network function.

In some optional embodiments, the DC media resource information includes at least one of:
an IP address and a port number of the second network function.

In some optional embodiments, the third DC information includes at least one of:
negotiated DC information that a DC is established with a first device or a first network;
DC information that a DC is to be established with a second device or a second network;
negotiated DC information; or
DC information to be negotiated.

The method for information processing in the embodiments of the present disclosure is described below with reference to specific examples. In the following examples 1 to 3, the first device is equivalent to the local-end device, the first network is equivalent to the local-end network, the second device is equivalent to the remote device, and the second network is equivalent to the remote network.

The messages defined in the following examples are not equivalent to the messages corresponding to the same names in the above-mentioned embodiments.

### Example 1

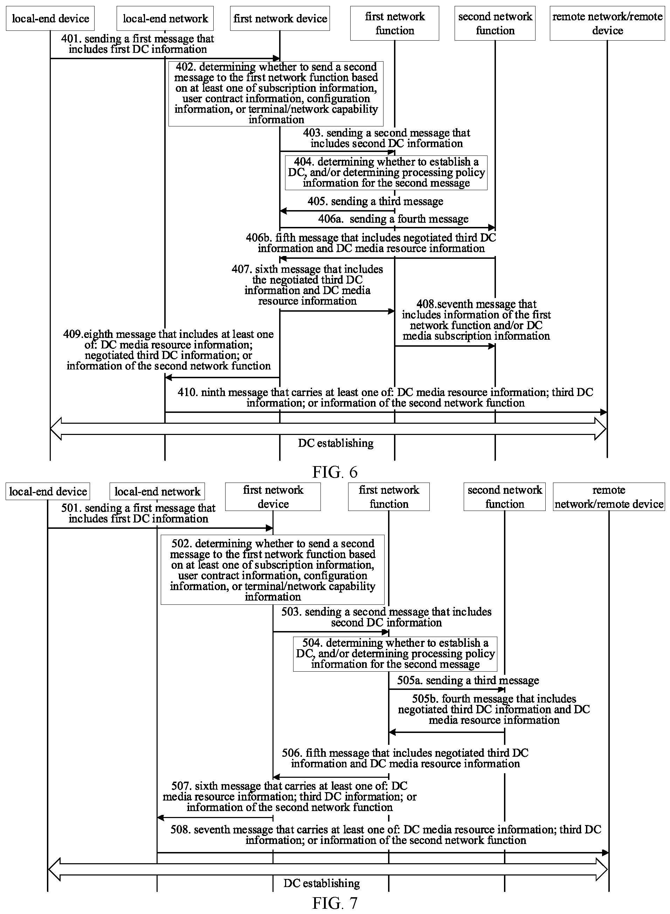

FIG. 6 is a first interaction flowchart of a method for information processing according to embodiments of the present disclosure. As illustrated in FIG. 6, the method includes the following steps at 401-410.

At 401, the local-end device sends a first message that includes first DC information to a first network device via the local-end network.

The first message may be a SIP invite request message (such as an invite request message, a re-invite request message, an UPDATE request message, etc.). The first message may include a DC SDP offer or an SDP offer. The first DC information may include at least one of:
DC media description information;
DC ID information;
label information;
DC capability information or information indicating whether a DC is supported by a device or a user;
an ID of the first device;
an ID of a second device, in which the second device is an opposite-end device relative to a first device; or
audio information and/or video information.

At 402, the first network device determines whether to send a second message to the first network function based on at least one of subscription information, user contract information, configuration information, or terminal/network capability information.

The second message includes second DC information, and the second DC information is at least part of the first DC information.

At 403, the first network device sends a second message to the first network function.

This example is applicable to a case that the first network device determines to send the second message to the first network function.

The second message is a notification message or a second DC request message. For example, the second message is a DC call event notification message or a DC call request message.

At 404, the first network function determines whether to establish a DC, and/or determines processing policy information for the second message.

Here, the first network function determines whether to establish the DC and/or determines the processing policy information for the second message based on at least one of the subscription information, the configuration information, the terminal/network capability information, and the at least part of the information included in the second DC information.

At 405, the first network function sends a third message to the first network device, in which the third message includes at least one of:
first indication information on whether to establish a first channel; or
second indication information on whether to process the second message.

The processing policy information for the second message includes at least one of following processing ways for a specified DC or a specified DC media stream: terminating, forwarding, newly establishing /initially establishing /originating.

At 406a, the first network device sends a fourth message to the second network function, in which the fourth message includes at least one of:
third indication information for indicating the second network function to set up or reserve DC media resources;
the processing policy information; or
information of the first network function.

At 406b, the second network function sends a fifth message to the first network device, in which the fifth message includes at least negotiated third DC information and DC media resource information.

The DC media resource information includes at least one of: an IP address and a port number of the second network function.

The third DC information includes at least one of:
negotiated DC information that a DC is established with a first device or a first network;
DC information that a DC is to be established with a second device or a second network;
negotiated DC information; or
DC information to be negotiated.

At 407, the first network device sends a sixth message to the first network function, in which the sixth message includes the negotiated third DC information and DC media resource information.

At 408, the first network function sends a seventh message to the second network function, in which the seventh message includes information of the first network function and/or DC media subscription information.

At 409, the first network device sends an eighth message to the local-end network, in which the eighth message includes at least one of:
DC media resource information;
negotiated third DC information; or
information of the second network function.

At 410, the local-end network sends a ninth message to the remote network/remote device, in which the ninth message includes at least one of:
DC media resource information;
negotiated third DC information; or
information of the second network function.

### Example 2

FIG. 7 is a second interaction flowchart of a method for information processing according to embodiments of the present disclosure. As illustrated in FIG. 7, the method includes the following steps at 501-508.

At 501, the local-end device sends a first message to a first network device via the local-end network; the first message includes first DC information.

At 502, the first network device determines whether to send a second message to the first network function based on at least one of subscription information, user contract information, configuration information, and terminal/network capability information.

At 503, the first network device sends a second message to the first network function.

At 504, the first network function determines whether to establish a DC, and/or determines processing policy information for the second message.

At 505a, the first network function sends a third message to the second network function, in which the third message is configured to perform at least one of:
indicating the second network function to set up or reserve DC media resources; or
completing media negotiation with a calling party and/or a called party.

Optionally, the third message includes second information, and the second information includes at least one of:
third indication information for indicating the second network function to set up or reserve DC media resources;
the processing policy information; or
information of the first network function.

Optionally, the third message further includes third information, and the third information includes at least one of:
first indication information on whether to establish a first channel; or
second indication information on whether to process the second message.

The processing policy information for the second message includes at least one of following processing ways for a DC, a DC media stream, a DC media description or a DC establishment request: terminating, forwarding, newly establishing /initially establishing /originating.

At 505b, the second network function sends a fourth message to the first network function, in which the fourth message includes at least negotiated third DC information and DC media resource information.

The DC media resource information includes at least one of: an IP address and a port number of the second network function.

The third DC information includes at least one of:
negotiated DC information that a DC is established with a first device or a first network;
DC information that a DC is to be established with a second device or a second network;
negotiated DC information; or
DC information to be negotiated.

At 506, the first network function sends a fifth message to the first network device, in which the fifth message includes at least negotiated third DC information and DC media resource information.

At 507, the first network device sends a sixth message to the local-end network, in which the sixth message includes at least one of:
DC media resource information;
negotiated third DC information; or
information of the second network function.

At 508, the local-end network sends a seventh message to the remote network/remote device, in which the seventh message includes at least one of:
DC media resource information;
negotiated third DC information; or
information of the second network function.

In the above-mentioned Example 1 and Example 2, the steps at 401 to 404 are the same as the steps at 501 to 504. The main difference between the two examples is that, in Example 1, a communication interface is provided between the first network device and the second network function, and the first network function may interact with the second network function via the first network device to negotiate DC media resources; in Example 2, the first network function and the second network function interact directly with each other, and the content carried in the third message at 505a may include the content carried in the message at 405 and/or the message at 406a.

### Example 3

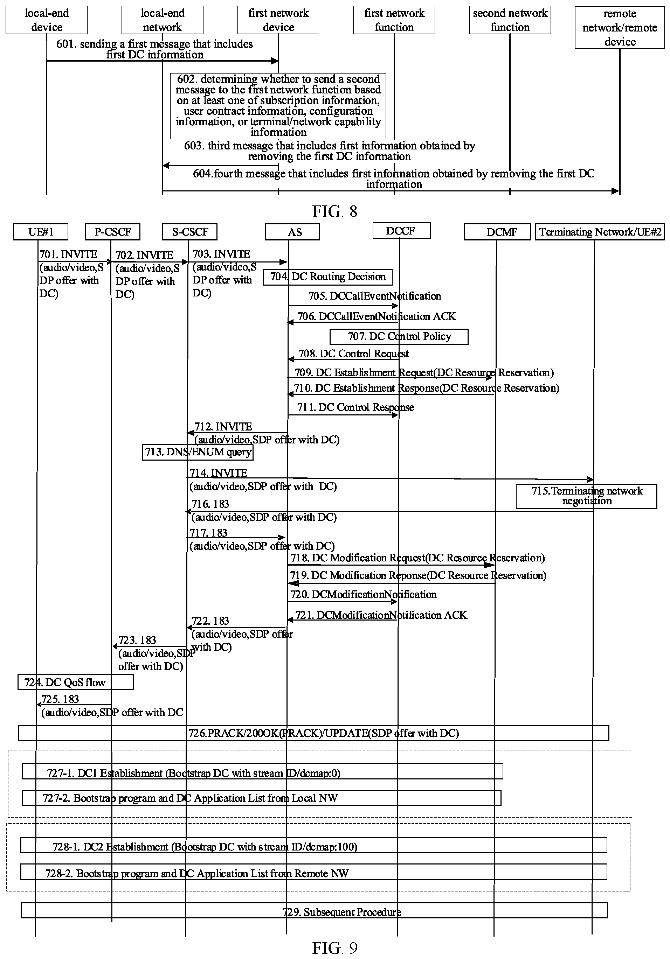

FIG. 8 is a third interaction flowchart of a method for information processing according to embodiments of the present disclosure. As illustrated in FIG. 8, the method includes the following steps at 601-604.

At 601, the local-end device sends a first message to a first network device via the local-end network. The first message includes first DC information.

At 602, the first network device determines whether to send a second message to the first network function based on at least one of subscription information, user contract information, configuration information, or terminal/network capability information.

At 603, the first network device sends a third message to the local-end network, in which the third message includes first information obtained by removing the first DC information.

For example, the first information may include audio information and/or video information.

This example is applicable to a case that the first network device determines not to send the second message to the first network function.

At 604, the local-end network sends a fourth message to the remote network/remote device, in which the fourth message includes the first information obtained by removing the first DC information.

### Example 4

This example takes a setup of the Bootstrap DC as an example. In this example, the local-end device is UE#1, the local-end network includes the P-CSCF and the S-CSCF, the first network device is the AS, the first network function is the DCS/DCS-C, the second network function is the DCM/DCS-U, and the remote device is UE#2.

FIG. 9 is a fourth interaction flowchart of a method for information processing according to embodiments of the present disclosure. As illustrated in FIG. 9, the method includes the following steps at 701-729.

At 701, a calling UE (UE#1) originates a call request to the P-CSCF, carries a SDP Offer of DC media in the INVITE message, and initiates an IMS session to a called party. The INVITE/SDO offer may include the following contents.
1. one or more DC media descriptions or DC establishment requests, corresponding to m3 and m4, in which m3 contains a=dcmap, where the stream ID is 0, and m4 contains a=dcmap, where the stream ID is 100, and the Label is caller or callee.
2. Audio/video information.

At 702, the P-CSCF sends an INVITE message to the S-CSCF. The information carried in the INVITE message is the same as the information carried in the INVITE message at 701.

At 703, the S-CSCF sends an INVITE message to the AS. The information carried in the INVITE message is the same as the information carried in the INVITE message at 701 .

At 704, the AS makes a DC routing decision, and the routing decision is based on at least one of user contract information, subscription of DC control function, AS configuration/policy (call request information), or network/device support for a DC capability.

At 705, the AS sends a DC call event notification (i.e., DCCallEventNotification) to the DCS/DCS-C. The DC call event notification may also be called an event notification or a DC request or a DC call request or a DC session request. The content of the notification/request needs to include DC-related information in the first message, a DC media description and/or a stream ID and/or a stream Label, etc.

At 706, the DCS/DCS-C sends a DC call event notification acknowledge (i.e., DCCallEventNotification ACK) to the AS. This step is an optional step, and its content may be an acknowledge of the DCCallEventNotification ACK or the DC request or the DC call request or the DC session request.

At 707, DCS/DCS-C determines a DC control policy.

At 708, the DCS/DCS-C sends a DC control request to the AS. The DC control request may also be expressed as a DC session request/DC request.

At 709, the AS sends a DC Establishment Request to the DCM/DCS-U for DC resource reservation.

At 710, the DCM/DCS-U sends a DC Establishment Response to the AS for DC Resource Reservation.

At 711, the AS sends a DC Control Response to the DCS/DCS-C. The order of this step may be adjusted, and it may also be placed after at 708.

At 712, the AS sends an INVITE message to the S-CSCF.

At 713, the S-CSCF executes a DNS/ENUM query.

At 714, the S-CSCF sends an INVITE message to the remote network or UE#2.

At 715, the remote network performs SDP negotiation (Terminating network negotiation).

At 716, the remote network or UE#2 sends a 183 message to the Originating NW I-CSCF to update SDP information.

At 717, the I/S-CSCF sends a 183 message to the AS.

At 718, the AS sends a DC Modification Request to the DCM/DCS-U for DC Resource Reservation.

At 719, the DCM/DCS-U sends a DC Modification Response to the AS for DC resource reservation (DC Resource Reservation).

At 720, the AS sends a DC modification notification (i.e., DCModificationNotification) to the DCS/DCS-C.

At 721, the DCS/DCS-C sends a DC modification notification acknowledgment (i.e., DCModificationNotification ACK) to the AS.

At 722, the AS sends a 183 message to the S-CSCF.

At 723, the S-CSCF sends a 183 message to the P-CSCF.

At 724, the UE#1 and the P-CSCF negotiate a DC quality of service (QoS) flow.

At 725, the P-CSCF sends a 183 message carrying the negotiated SDP to the UE#1.

At 726, the PRACK/200OK (PRACK)/UPDATE (SDP offer with DC) is performed between the UE#1 and the UE#2.

At 727-1, the UE#1 establishes DC1 (DC1 Establishment) with the DCM/DCS-U; DC1 is a Bootstrap DC, which is one established between the UE#1 and the calling DCMF, the same as DC#1 in FIG. 4.

At 727-2, Bootstrap program and DC Application List from Local network (NW).

At 728-1, the UE#1 establishes DC2 (DC2 Establishment) with the remote network or UE#2; DC2 is a Bootstrap DC, which is one established between UE#1 and the called network/called DCMF, the same as DC#2 in FIG. 4.

At 728-2, Bootstrap program and DC Application List from Remote NW;

At 729, Subsequent Procedure.

### Example 5

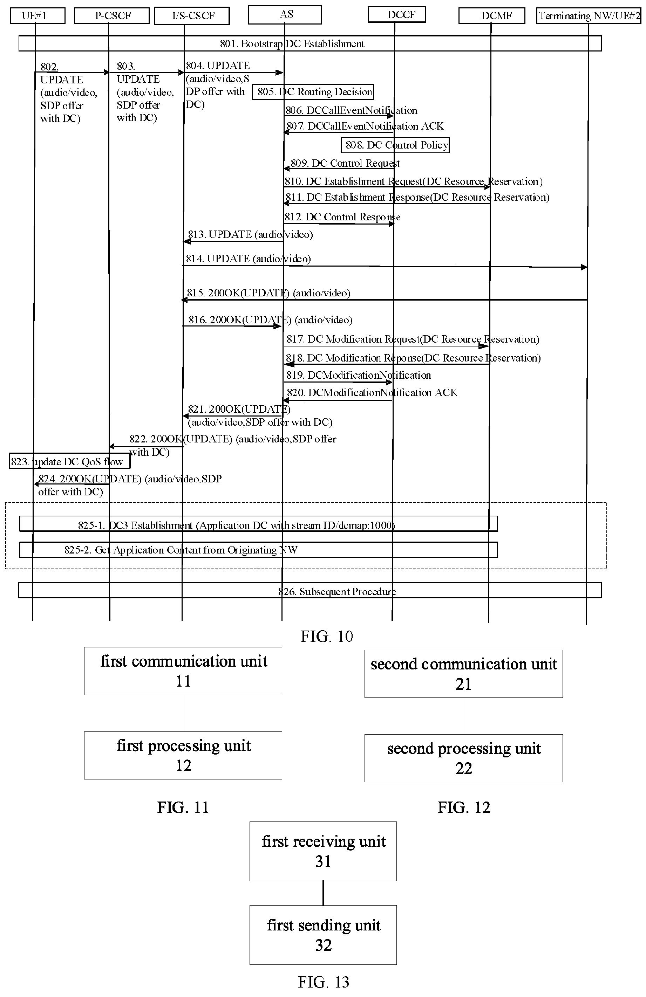

This example takes the establishment of Application DC as an example. In this example, the local-end device is UE#1, the local-end network includes an Originating NW and an I/S-CSCF, the first network device is the AS, the first network function is the DCS/DCS-C, the second network function is the DCM/DCS-U, and the remote device is the UE#2. FIG. 10 is a fifth interaction flowchart of a method for information processing according to embodiments of the present disclosure. As illustrated in FIG. 10, the method includes the following steps at 801-826.

At 801, Bootstrap DC Establishment is established between UE#1 and UE#2.

At 802, UE#1 sends an UPDATE message to the Originating NW.
1. The calling UE (UE#1) originates a call request to the P-CSCF, carrying the updated SDP in the UPDATE. The INVITE/SDP offer may include:
   1. one or more DC media descriptions or DC establishment requests, corresponding to m3, in which:
      m3 contains a=dcmap, where the stream ID is 0, and m4 contains a=dcmap, where the stream ID is 1000, and the Label is caller or callee.
   2. Audio/video information.

At 803, the P-CSCF sends an UPDATE message to the S-CSCF.

At 804, the S-CSCF sends an UPDATE message to the AS.

At 805, the AS makes a DC routing decision. The routing decision is based on user contract information and/or DC control function subscription and/or AS configuration/policy (call request information) and/or network/device support for a DC capability.

At 806, the AS sends a DC call event notification (i.e., DCCallEventNotification) to the DCS/DCS-C. The DC call event notification may also be called an event notification or a DC request or a DC call request or a DC session request. The content of the notification/request needs to include DC-related information in the first message, a DC media description and/or a stream ID and/or a stream Label, etc.

At 807, the DCS/DCS-C sends a DC call event notification acknowledgment (i.e., DCCallEventNotification ACK) to the AS.

At 808, the DCS/DCS-C determines a DC control policy.

At 809, the DCS/DCS-C sends a DC control request to the AS. The DC control request may also be expressed as a DC session request/DC request.

At 810, the AS sends a DC Establishment Request to the DCM/DCS-U for DC resource reservation.

At 811, the DCM/DCS-U sends a DC Establishment Response to the AS for DC Resource Reservation.

At 812, the AS sends a DC Control Response to the DCS/DCS-C. The order of this step may be adjusted, and it may also be placed after at 809.

At 813, the AS sends an UPDATE message to the S-CSCF.

At 814, the S-CSCF sends an UPDATE message to the Terminating NW/UE#2.

At 815, the UE#2 sends a 200OK (UPDATE) message to the Originating NW I-CSCF.

At 816, the I/S-CSCF sends a 200 OK (UPDATE) message to the AS.

At 817, the AS sends a DC Modification Request to the DCM/DCS-U for DC Resource Reservation.

At 818, the DCM/DCS-U sends a DC Modification Response to the AS for DC Resource Reservation.

At 819, the AS sends a DC modification notification (i.e., DCModificationNotification) to the DCS/DCS-C.

At 820, the DCS/DCS-C sends a DC modification notification acknowledge (i.e., DCModificationNotification ACK) to the AS.

At 821, the AS sends a 200 OK (UPDATE) message to the S-CSCF.

At 822, the S-CSCF sends a 200 OK (UPDATE) message to the P-CSCF.

At 823, the P-CSCF updates a DC QoS flow with the UE#1.

At 824, the P-CSCF sends a 200 OK (UPDATE) message to the UE#1.

At 825-1, the UE#1 establishes a DC3 (DC3Establishment) with the DCM/DCS-U. The DC3 is an Application DC, which is one established between the UE# 1 and the calling DCMF, the same as DC#5 in FIG. 4.

At 825-2, an application content is got from the Originating NW (Get Application Content from Originating NW).

### At 826, Subsequent Procedure.

Based on the above embodiments, the embodiments of the present disclosure further provide an apparatus for information processing, which is applied in a first network device. FIG. 11 is a first composition structure diagram of an apparatus for information processing according to embodiments of the disclosure. As illustrated in FIG. 11, the apparatus includes: a first communication unit 11 and a first processing unit 12.

The first communication unit 11 is configured to receive a first message, in which the first message includes at least first DC information.

The first processing unit 12 is configured to determine whether to send a second message to a first network function based on at least one of subscription information, user contract information, configuration information, or terminal/network capability information.

In some optional embodiments of the present disclosure, the second message includes second DC information, and the second DC information is at least part of the first DC information.

In some optional embodiments of the present disclosure, the first DC information includes at least one of:
DC media description information;
DC ID information;
label information;
DC capability information or information indicating whether a DC is supported by a device or a user;
an ID of the first device;
an ID of a second device, in which the second device is an opposite-end device relative to a first device;
audio information and/or video information; or
a DC establishment request.

In some optional embodiments of the present disclosure, the DC media description information includes at least one of:
the DC ID information; or
the label information.

In some optional embodiments of the present disclosure, the DC media description information includes one or more pieces of DC media description information.

In some optional embodiments of the present disclosure, the first DC information includes one or more pieces of DC media description information.

In some optional embodiments of the present disclosure, the DC capability information includes at least one of:
a DC capability;
a DC capability list;
a DC service or a DC application; or
a DC service list or a DC application list.

In some optional embodiments of the present disclosure, the DC establishment request includes at least one of:
the DC ID information; or
the label information.

In some optional embodiments of the present disclosure, the first message is a SIP invite request message, a DC SDP offer or a first DC request message.

In some optional embodiments of the present disclosure, the user contract information includes at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

In some optional embodiments of the present disclosure, the subscription information includes at least one of:
at least part of the first DC information;
information that a user device has signed a DC contract or has been authorized to use a DC capability, a DC service or a DC business;
an ID of a first device; or
an ID of a second device.

In some optional embodiments of the present disclosure, the configuration information includes at least one of:
at least part of the first DC information;
information that a user device has signed a DC contract or has been authorized to use a DC capability, a DC service or a DC business;
an ID of the first device; or
an ID of a second device.

In some optional embodiments of the present disclosure, the terminal/network capability information includes at least one of:
information on whether a network and/or a device supports a DC capability and/or a DC capability list; or
information on whether a network and/or a device supports a DC service/business, and/or a DC service/business list;
the network and/or the device includes at least one of: a first device, a first network, a second device, or a second network, in which the first network is a network where the first device is located, the second device is an opposite-end device relative to the first device, and the second network is a network where the second device is located.

In some optional embodiments of the present disclosure, the first communication unit 11 is further configured to send the second message to the first network function in case that the first processing unit 12 determines to send the second message to the first network function.

In some optional embodiments of the present disclosure, the first communication unit 11 is further configured to receive a third message from the first network function, in which the third message includes at least one of:
first indication information on whether to establish a first channel;
second indication information on whether to process the second message;
a first policy on how to establish a first channel;
a second policy on how to process a first channel establishment request; or
processing indication/policy information.

The processing indication/policy information, the first policy or the second policy includes at least one of following processing ways for a DC, a DC media stream, a DC media description or a DC establishment request: terminating, forwarding, newly establishing /initially establishing /originating.

In some optional embodiments of the present disclosure, the first communication unit 11 is further configured to send a fourth message to a second network function, in which the fourth message is configured to perform at least one of:
indicating the second network function to set up or reserve DC media resources; or
completing media negotiation with a calling party and/or a called party.

In some optional embodiments of the present disclosure, the fourth message includes at least one of:
third indication information for indicating the second network function to set up or reserve DC media resources;
the processing indication/policy information; or
information of the first network function.

In some optional embodiments of the present disclosure, the first communication unit 11 is further configured to receive a fifth message from the second network function, in which the fifth message includes at least negotiated third DC information and/or DC media resource information.

In some optional embodiments of the present disclosure, the first communication unit 11 is further configured to send the third DC information and/or DC media resource information to the first network function.

In some optional embodiments of the present disclosure, the first communication unit 11 is further configured to receive a sixth message from the first network function, in which the sixth message includes at least negotiated third DC information and/or DC media resource information.

In some optional embodiments of the present disclosure, the DC media resource information includes at least one of:
an IP address and a port number of the second network function.

In some optional embodiments of the present disclosure, the third DC information includes at least one of:
negotiated DC information that a DC is established with a first device or a first network;
DC information that a DC is to be established with a second device or a second network;
negotiated DC information; or
DC information to be negotiated.

In some optional embodiments of the present disclosure, the first communication unit 11 is further configured to send a seventh message to a second network device, in which the second network device is a device of a first network where the first device is located.

The seventh message includes at least one of:
DC media resource information;
the third DC information;
information of the second network function.

In some optional embodiments of the present disclosure, the second message is a notification message or a second DC request message.

In some optional embodiments of the present disclosure, the first processing unit 12 is further configured to in case that the first network device determines not to send the second message to the first network function, perform at least one of:
determining first information, in which the first information is obtained by removing the first DC information from information carried in the first message; or
sending the first information via the first communication unit 11 to a second network device, in which the second network device is a device of a first network where a first device is located.

In some optional embodiments of the present disclosure, the DC includes at least one of: a Bootstrap DC and an Application DC.

In the embodiments of the present disclosure, the first processing unit 12 in the apparatus may be implemented by a central processing unit (CPU), a digital signal processor (DSP), a microcontroller unit (MCU) or a programmable gate array (FPGA) in actual applications; the first communication unit 11 in the apparatus may be implemented by a communication module (including a basic communication kit, an operating system, a communication module, a standardized interface and a protocol, etc.) and a transceiver antenna in actual applications.

The embodiments of the present disclosure also provide an apparatus for information processing, which is applied in a first network function. FIG. 12 is a second composition structure diagram of an apparatus for information processing according to embodiments of the disclosure. As illustrated in FIG. 12, the apparatus includes a second communication unit 21 and a second processing unit 22.

The second communication unit 21 is configured to receive a second message from a first network device.

The second processing unit 22 is configured to perform based on the second message, at least one action of:
determining whether to establish a first channel;
determining how to establish a first channel;
determining how to process a first channel establishment request; or
determining processing indication/policy information.

In some optional embodiments of the present disclosure, the second message includes second DC information, and the second DC information is at least part of first DC information from a first device.

In some optional embodiments of the present disclosure, the second DC information includes at least one of:
DC media description information;
DC ID information;
label information;
DC capability information or information indicating whether the DC is supported by a device or a user;
an ID of the first device;
an ID of an ID of a second device, in which the second device is an opposite-end device relative to a first device;
audio information and/or video information; or
a DC establishment request.

In some optional embodiments of the present disclosure, the DC media description information includes at least one of:
the DC ID information; or
the label information.

In some optional embodiments of the present disclosure, the DC media description information includes one or more pieces of DC media description information.

In some optional embodiments of the present disclosure, the first DC information includes one or more pieces of DC media description information.

In some optional embodiments of the present disclosure, the DC capability information includes at least one of:
a DC capability;
a DC capability list;
a DC service or a DC application; or
a DC service list or a DC application list.

In some optional embodiments of the present disclosure, the DC establishment request includes at least one of:
the DC ID information; or
the label information.

In some optional embodiments of the present disclosure, the second message is a notification message or a second DC request message.

In some optional embodiments of the present disclosure, the second processing unit 22 is configured to perform at least one of determining whether to establish the first channel; determining how to establish the first channel; determining how to process the first channel establishment request; or determining the processing indication/policy information, based on at least one of contract information, configuration information/an operator policy, terminal/network capability information, or at least part of information included in the second DC information.

In some optional embodiments of the present disclosure, the contract information includes at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

In some optional embodiments of the present disclosure, the configuration information/operator policy includes at least one of:
at least part of the second DC information;
a user device has signed a DC contract or has been authorized to use a DC capability, a DC service or a DC business;
an ID of a first device; or
an ID of a second device, in which the second device is an opposite-end device relative to the first device.

In some optional embodiments of the present disclosure, the terminal/network capability information includes at least one of:
information on whether a network and/or a device supports a DC capability and/or a DC capability list; or
information on whether a network and/or a device supports a DC service/business, and/or a DC service/business list;
the network and/or the device includes at least one of: a first device, a first network, a second device, or a second network, in which the first network is a network where the first device is located, the second device is an opposite-end device relative to the first device, and the second network is a network where the second device is located.

In some optional embodiments of the present disclosure, the second communication unit 21 is further configured to send a third message to the first network device, in which the third message includes at least one of:
first indication information on whether to establish a first channel;
second indication information on whether to process the second message;
a first policy on how to establish a first channel;
a second policy on how to process a first channel establishment request; or
the processing indication/policy information.

The processing indication/policy information, the first policy or the second policy includes at least one of following processing ways for a DC, a DC media stream, a DC media description or a DC establishment request of terminating, forwarding, newly establishing/initially establishing/originating.

In some optional embodiments of the present disclosure, the second communication unit 21 is further configured to send an eighth message to a second network function, in which the eighth message is configured to perform at least one of:
indicating the second network function to set up or reserve DC media resources; or
completing media negotiation with a calling party and/or a called party.

In some optional embodiments of the present disclosure, the eighth message includes second information, and the second information includes at least one of:
third indication information for indicating the second network function to set up or reserve DC media resources;
the processing indication/policy information; or
information of the first network function.

In some optional embodiments of the present disclosure, the eighth message further includes third information, and the third information includes at least one of:
first indication information on whether to establish a first channel;
second indication information on whether to process the second message;
a first policy on how to establish a first channel;
a second policy on how to process a first channel establishment request; or
the processing indication/policy information.

The processing indication/policy information, the first policy or the second policy includes at least one of following processing ways for a DC, a DC media stream, a DC media description or a DC establishment request of terminating, forwarding, newly establishing/initially establishing/originating.

In some optional embodiments of the present disclosure, the second communication unit 21 is further configured to receive negotiated third DC information and/or DC media resource information from the first network device.

In some optional embodiments of the present disclosure, the second communication unit 21 is further configured to receive a ninth message from the second network function, in which the ninth message includes at least negotiated third DC information and/or DC media resource information.

In some optional embodiments of the present disclosure, the DC media resource information includes at least one of:
an IP address and a port number of the second network function.

In some optional embodiments of the present disclosure, the third DC information includes at least one of:
negotiated DC information that a DC is established with a first device or a first network;
DC information that a DC is to be established with a second device or a second network;
negotiated DC information; or
DC information to be negotiated.

In some optional embodiments of the present disclosure, the second communication unit 21 is further configured to send a sixth message to the first network device, in which the sixth message includes at least the negotiated third DC information and/or DC media resource information.

In some optional embodiments of the present disclosure, the second processing unit 22 is configured to perform at least one of: in case that a first network does not support a DC capability, determining to establish at least one of: a data channel (DC) between a first device and a second network, a DC between a second device and a second network, or a DC between a first device and a second device;
in case that a second network does not support a DC capability, determining to establish at least one of: a DC between a first device and a first network, a DC between a second device and a first network, or a DC between a first device and a second device;
in case that neither a first network nor a second network supports a DC capability, not establishing a DC;
in case that a first device does not support a DC capability, determining to establish a DC between a second device and a first network, and/or a DC between a second device and a second network;
in case that a second device does not support a DC capability, determining to establish a DC between a first device and a first network, and/or a DC between a first device and a second network;
in case that neither a first device nor a second device supports a DC capability, not establishing a DC;
in case that a DC establishment request aims at a DC media function of a first network, terminating the DC establishment request; or
in case that a DC establishment request aims at a DC media function of a second network or a second device, transparently transmitting/forwarding, or initializing/newly establishing the DC establishment request;
the first network is a network where the first device is located, the second device is an opposite-end device relative to the first device, and the second network is a network where the second device is located.

In some optional embodiments of the present disclosure, the first channel includes at least one of: a Bootstrap DC, or an Application DC.

In the embodiments of the present disclosure, the second processing unit 22 in the apparatus may be implemented by a CPU, a DSP, a MCU or a FPGA in actual applications; the first communication unit in the apparatus may be implemented by a communication module (including a basic communication kit, an operating system, a communication module, a standardized interface and a protocol, etc.) and a transceiver antenna in actual applications.

The embodiments of the present disclosure also provide an apparatus for information processing, which is applied to a second network function. FIG. 13 is a third composition structure diagram of an apparatus for information processing according to embodiments of the disclosure. As illustrated in FIG. 13, the apparatus includes a first receiving unit 31 and a first sending unit 32.

The first receiving unit 31 is configured to receive a fourth message from a first network device, or receive an eighth message from a first network function via a second network function.

The first sending unit 32 is configured to send a fifth message to the first network device based on the fourth message, or send a ninth message to the first network function based on the eighth message, in which the fifth message and the ninth message include at least negotiated third DC information and/or DC media resource information.

In some optional embodiments of the present disclosure, the fourth message is configured to perform at least one of:
indicating the second network function to set up or reserve DC media resources; or
completing media negotiation with a calling party and/or a called party; and/or the eighth message is at least configured to perform at least one of:
   indicating the second network function to set up or reserve DC media resources; or
   completing media negotiation with a calling party and/or a called party.

In some optional embodiments of the present disclosure, the eighth message includes second information, and the second information includes at least one of:
third indication information for indicating the second network function to set up or reserve DC media resources;
the processing indication/policy information; or
information of the first network function.

In some optional embodiments of the present disclosure, the eighth message further includes third information, and the third information includes at least one of:
first indication information on whether to establish a first channel;
second indication information on whether to process the second message;
a first policy on how to establish a first channel;
a second policy on how to process a first channel establishment request; or
the processing indication/policy information;

The processing indication/policy information, the first policy or the second policy includes at least one of following processing ways for a DC, a DC media stream, a DC media description or a DC establishment request of terminating, forwarding, newly establishing/initially establishing/originating.

In some optional embodiments of the present disclosure, the fourth message includes at least one of:
third indication information for indicating the second network function to set up or reserve DC media resources;
the processing indication/policy information; or
information of the first network function.

In some optional embodiments of the present disclosure, the DC media resource information includes at least one of:
an IP address and a port number of the second network function.

In some optional embodiments of the present disclosure, the third DC information includes at least one of:
negotiated DC information that a DC is established with a first device or a first network;
DC information that a DC is to be established with a second device or a second network;
negotiated DC information; or
DC information to be negotiated.

In the embodiments of the present disclosure, the first sending unit 32 and the first receiving unit 31 in the apparatus may be implemented by a communication module (including a basic communication kit, an operating system, a communication module, a standardized interface and a protocol, etc.) and a transceiver antenna in actual applications.

It should be noted that, when the apparatus for information processing according to the above embodiments performs information processing, only the division of the above-mentioned program modules is used as an example. In actual applications, the above-mentioned processing may be assigned to different program modules as needed. That is, the internal structure of the apparatus may be divided into different program modules to complete all or part of the processing described above. In addition, the apparatus for information processing and the method for information processing according to the above embodiments belong to the same concept, and specific implementations for the apparatus are detailed in the method embodiments, which will not be repeated here.

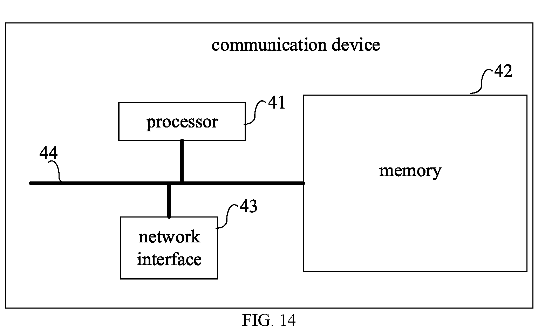

The embodiments of the present disclosure further provide a communication device, which is a first network device, a first network function, or a second network function. FIG. 14 is a composition structure diagram of a communication device according to embodiments of the disclosure. As illustrated in FIG. 14, the communication device includes a memory 42, a processor 41, and a computer program stored in the memory 42 and executable by the processor 41. When the program is executed by the processor 41, the steps of the method for information processing applied to the first network device are implemented; or, when the program is executed by the processor 41, the steps of the method for information processing applied to the first network function are implemented; or when the program is executed by the processor 41, the steps of the method for information processing applied to the second network function are implemented.

Optionally, the communication device further includes at least one network interface 43 . The various components in the communication device are coupled together via a bus system 44. It may be understood that the bus system 44 is configured to achieve connection and communication between these components. The bus system 44 includes a power bus, a control bus and a state signal bus in addition to the data bus. However, for the sake of clarity, various buses are denoted as the bus system 44 in FIG. 14.

It may be understood that the memory 42 may be a volatile memory or a non-volatile memory, and can also include both the volatile and non-volatile memories. The non-volatile memory may be a read-only memory (ROM), a programmable read-only memory (PROM), an erasable programmable read-only memory (EPROM), an electrically erasable programmable read-only memory (EEPROM), a magnetic random access memory (FRAM), a flash memory, a magnetic surface memory, an optical disc, or a compact disc read-only memory (CD-ROM). The magnetic surface memory may be a disk memory or a tape memory. The volatile memory may be a random access memory (RAM), which is used as an external cache memory. By way of example and not limitation, many forms of the RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory 42 described in the embodiments of the present disclosure is intended to include, but is not limited to, these types of memory and any other suitable types of memory.

The method disclosed in the above-mentioned embodiments of the present disclosure may be applied to the processor 41 or implemented by the processor 41. The processor 41 may be an integrated circuit chip with a signal processing capability. In the implementation, each step of the above methods may be completed by an integrated logic circuit of hardware in the processor 41 or instructions in the form of software. The processor 41 mentioned above may be a general-purpose processor, a DSP, or other programmable logic devices, a discrete gate or a transistor logic devices, discrete hardware components, etc. The processor 41 may implement or execute the methods, steps and logic block diagrams disclosed in the embodiments of the present disclosure. The general purpose processor may be a microprocessor or any conventional processor or the like. The steps of the method disclosed in the embodiments of the present disclosure may be directly implemented as being executed by a hardware decoding processor, or may be implemented as being executed by a combination of hardware and software modules in the decoding processor. The software module may be located in a storage medium, which is located in the memory 42. The processor 41 reads information in the memory 42 and completes the steps of the above-mentioned method in combination with its hardware.

In an exemplary embodiment, the communication device may be implemented by one or more application specific integrated circuits (ASIC), DSPs, programmable logic devices (PLDs), complex programmable logic devices (CPLDs), FPGAs, general purpose processors, controllers, MCUs, microprocessors, or other electronic components to execute the above-mentioned methods.

In an exemplary embodiment, the present disclosure also provides a computer-readable storage medium, such as a memory 42 including a computer program, and the computer program may be executed by a processor 41 of a communication device to complete the steps of the above-mentioned method. The computer-readable storage medium may be a memory such as FRAM, ROM, PROM, EPROM, EEPROM, Flash Memory, magnetic surface storage, optical disk, or CD-ROM; or may be various devices including one or any combination of the above memories.

The computer-readable storage medium according to the embodiments of the present disclosure stores a computer program. When the computer program is executed by a processor, the steps of the method for information processing applied to the first network device are implemented; or when the computer program is executed by a processor, the steps of the method for information processing applied to the first network function are implemented; or when the computer program is executed by a processor, the steps of the method for information processing applied to the second network function are implemented.

The methods disclosed in several method embodiments according to the disclosure may be arbitrarily combined without conflict to obtain new method embodiments.

The features disclosed in several product embodiments according to the disclosure may be arbitrarily combined without conflict to obtain new product embodiments.

The features disclosed in several method or device embodiments according to the disclosure may be arbitrarily combined without conflict to obtain new method embodiments or apparatus embodiments.

In several embodiments according to the disclosure, it should be understood that the disclosed apparatuses and methods may be implemented in other ways. The apparatus embodiments described above are merely exemplary. For example, the division of the units is merely a logical function division. There may be other division methods in actual implementation. For example, a plurality of units or components may be combined, or may be integrated into another system, or some features may be ignored or not executed. In addition, the coupling, direct coupling, or communication connection between the components shown or discussed may be implemented by some interfaces, and indirect coupling or communication connection of the devices or units may be electrical, mechanical or other forms.

The units described above as separate components may or may not be physically separated, and the components displayed as units may or may not be physical units, that is, they may be located in one place or distributed on a plurality of network units. Some or all of the units may be selected according to actual needs to achieve the purpose of the present embodiment.

In addition, all functional units in the embodiments of the present disclosure may be integrated into one processing unit, or each unit may be separately configured as a unit, or two or more units may be integrated into one unit. The above-mentioned integrated units may be implemented in the form of hardware or in the form of hardware plus software functional units.

Those skilled in the art may understand that, all or part of the steps of implementing the above-mentioned method embodiments may be completed by hardware related to program instructions, and the above-mentioned programs may be stored in a computer-readable storage medium, which, when executed, implements the steps of the above-mentioned method embodiments. The above-mentioned storage medium includes various media that can store program codes, such as a mobile storage device, a ROM, a RAM, a magnetic disk or an optical disk.

Alternatively, if the above-mentioned integrated units of the present disclosure is implemented in the form of software function modules and sold or used as an independent product, it may also be stored in a computer-readable storage medium. Based on this understanding, the technical solutions in the embodiments of the present disclosure may essentially or contribute to the related art in the form of the software product. The computer software product is stored in the storage medium and includes a number of instructions for enabling a computer device (which may be a personal computer, a server, or a network device, etc.) to execute all or part of the methods described in the various embodiments of the present disclosure. The above-mentioned storage media include a mobile storage device, a ROM, a RAM, a magnetic disk or an optical disk and other media that can store program codes.

It may be understood that the embodiments described in the present disclosure may be implemented in hardware, software, firmware, middleware, microcode, or their combination. For hardware implementation, modules, units, sub-modules, sub-units, etc. may be implemented in one or more ASICs, DSPs, digital signal processing devices (DSPDs), PLDs, FPGAs, general-purpose processors, controllers, MCUs, microprocessors, other electronic units for performing the functions described in the present disclosure, or their combinations.

The above description is only a specific implementation of the present disclosure, but the protection scope of the present disclosure is not limited. Any person familiar with the technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A method for information processing, comprising:
receiving by a first network device a first message, wherein the first message comprises at least first data channel (DC) information; and
determining by the first network device, whether to send a second message to a first network function based on at least one of subscription information, user contract information, configuration information, or terminal/network capability information.

2. The method according to claim 1, wherein the second message comprises second DC information, and the second DC information is at least part of the first DC information.

3. The method according to claim 1, wherein the first DC information comprises at least one of:
DC media description information;
DC identifier (ID) information;
label information;
DC capability information or information indicating whether a DC is supported by a device or a user;
an ID of a first device;
an ID of a second device, wherein the second device is an opposite-end device relative to a first device;
audio information and/or video information; or
a DC establishment request.

4. The method according to claim 3, wherein the DC media description information comprises at least one of: the DC ID information; or the label information.

5. The method according to claim 3, wherein the DC establishment request comprises at least one of: the DC ID information; or the label information.

6. The method according to claim 3, wherein the DC capability information comprises at least one of:
a DC capability;
a DC capability list;
a DC service or a DC application; or
a DC service list or a DC application list.

7. The method according to claim 1, wherein the first message is a session initiation protocol (SIP) invite request message, a DC session description protocol (SDP) offer or a first DC request message.

8. The method according to claim 1, wherein the user contract information comprises at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

9. The method according to claim 1, wherein the subscription information comprises at least one of:
at least part of the first DC information;
information that a user device has signed a DC contract or has been authorized to use a DC capability, a DC service or a DC business;
an identifier (ID) of a first device; or
an ID of a second device.

10. The method according to claim 1, wherein the configuration information comprises at least one of:
at least part of the first DC information;
information that a user device has signed a DC contract or has been authorized to use a DC capability, a DC service or a DC business;
an identifier (ID) of a first device; or
an ID of a second device.

11. The method according to claim 1, wherein the terminal/network capability information comprises at least one of:
information on whether a network and/or a device supports a DC capability and/or a DC capability list; or
information on whether a network and/or a device supports a DC service/business, and/or a DC service/business list;
wherein the network and/or the device comprises at least one of: a first device, a first network, a second device, or a second network, wherein the first network is a network where the first device is located, the second device is an opposite-end device relative to the first device, and the second network is a network where the second device is located.

12. The method according to claim 1 or 2, further comprising:
in case that the first network device determines to send the second message to the first network function, sending by the first network device, the second message to the first network function.

13. The method according to claim 12, further comprising:
receiving by the first network device, a third message from the first network function, wherein the third message comprises at least one of:
first indication information on whether to establish a first channel;
second indication information on whether to process the second message;
a first policy on how to establish a first channel;
a second policy on how to process a first channel establishment request; or
processing indication/policy information.

14. The method according to claim 13, wherein the processing indication/policy information, the first policy or the second policy comprises at least one of following processing ways for a DC, a DC media stream, a DC media description or a DC establishment request: terminating, forwarding, newly establishing /initially establishing /originating.

15. The method according to claim 13 or 14, further comprising:
sending by the first network device, a fourth message to a second network function, wherein the fourth message is configured to perform at least one of:
indicating the second network function to set up or reserve DC media resources; or
completing media negotiation with a calling party and/or a called party.

16. The method according to claim 15, wherein the fourth message comprises at least one of:
third indication information for indicating the second network function to set up or reserve DC media resources;
the processing indication/policy information; or
information of the first network function.

17. The method according to claim 15, further comprising:
receiving by the first network device, a fifth message from the second network function, wherein the fifth message comprises at least negotiated third DC information and/or DC media resource information.

18. The method according to claim 17, further comprising:
sending by the first network device, the third DC information and/or DC media resource information to the first network function.

19. The method according to claim 12, further comprising:
receiving by the first network device, a sixth message from the first network function, wherein the sixth message comprises at least negotiated third DC information and/or DC media resource information.

20. The method according to claim 17 or 19, wherein the DC media resource information comprises at least one of: an Internet protocol (IP) address or a port number of the second network function.

21. The method according to claim 17 or 19, wherein the third DC information comprises at least one of:
negotiated DC information that a DC is established with a first device or a first network;
DC information that a DC is to be established with a second device or a second network;
negotiated DC information; or
DC information to be negotiated.

22. The method according to claim 17 or 19, further comprising:
sending by the first network device, a seventh message to a second network device, wherein the second network device is a device of a first network where a first device is located;
wherein the seventh message comprises at least one of:
DC media resource information;
the third DC information; or
information of the second network function.

23. The method according to claim 12, wherein the second message is a notification message or a second DC request message.

24. The method according to claim 1, further comprising:
in case that the first network device determines not to send the second message to the first network function, performing at least one of:
determining first information, wherein the first information is obtained by removing the first DC information from information carried in the first message; or
sending the first information to a second network device, wherein the second network device is a device of a first network where a first device is located.

25. The method according to claim 1, wherein the DC comprises at least one of: a Bootstrap DC or an Application DC.

26. A method for information processing, comprising:
receiving by a first network function, a second message from a first network device;
performing by the first network function based on the second message, at least one action of:
determining whether to establish a first channel;
determining how to establish a first channel;
determining how to process a first channel establishment request; or
determining processing indication/policy information.

27. The method according to claim 26, wherein the second message comprises second data channel (DC) information, and the second DC information is at least part of first DC information from a first device.

28. The method according to claim 26 or 27, wherein the second DC information comprises at least one of:
DC media description information;
DC identifier (ID) information;
label information;
DC capability information or information indicating whether the DC is supported by a device or a user;
an ID of a first device;
an ID of a second device, wherein the second device is an opposite-end device relative to a first device;
audio information and/or video information; or
a DC establishment request.

29. The method according to claim 28, wherein the DC media description information comprises at least one of: the DC ID information; or the label information.

30. The method according to claim 28, wherein the DC establishment request comprises at least one of: the DC ID information; or the label information.

31. The method according to claim 28, wherein the DC capability information comprises at least one of:
a DC capability;
a DC capability list;
a DC service or a DC application; or
a DC service list or a DC application list.

32. The method according to claim 26, wherein the second message is a notification message or a second data channel (DC) request message.

33. The method according to claim 27, wherein performing by the first network function based on the second message, at least one action of: determining whether to establish the first channel; determining how to establish the first channel; determining how to process the first channel establishment request; or determining the processing indication/policy information, comprises:
performing by the first network function at least one of determining whether to establish the first channel; determining how to establish the first channel; determining how to process the first channel establishment request; or determining the processing indication/policy information, based on at least one of contract information, configuration information/an operator policy, terminal/network capability information, or at least part of information included in the second DC information.

34. The method according to claim 33, wherein the contract information comprises at least one of:
information on whether a user device is allowed to use a DC capability, and/or whether a user device is allowed to use a DC capability list;
a DC capability that a user device is allowed to use, and/or a DC capability list that a user device is allowed to use;
information on whether a user device is allowed to use a DC service/business, and/or whether a user device is allowed to use a DC service/business list; or
a DC service/business that a user device is allowed to use, and/or a DC service/business list that a user device is allowed to use.

35. The method according to claim 33, wherein the configuration information/operator policy comprises at least one of:
at least part of the second DC information;
a user device has signed a DC contract or has been authorized to use a DC capability, a DC service or a DC business;
an identifier (ID) of a first device; or
an ID of a second device, wherein the second device is an opposite-end device relative to the first device.

36. The method according to claim 33, wherein the terminal/network capability information comprises at least one of:
information on whether a network and/or a device supports a DC capability and/or a DC capability list; or
information on whether a network and/or a device supports a DC service/business, and/or a DC service/business list;
wherein the network and/or the device comprises at least one of: a first device, a first network, a second device, or a second network, wherein the first network is a network where the first device is located, the second device is an opposite-end device relative to the first device, and the second network is a network where the second device is located.

37. The method according to claim 26, further comprising:
sending by the first network function, a third message to the first network device, wherein the third message comprises at least one of:
first indication information on whether to establish a first channel;
second indication information on whether to process the second message;
a first policy on how to establish a first channel;
a second policy on how to process a first channel establishment request; or
the processing indication/policy information.

38. The method according to claim 37, wherein the processing indication/policy information, the first policy or the second policy comprises at least one of following processing ways for a DC, a DC media stream, a DC media description or a DC establishment request of terminating, forwarding, newly establishing/initially establishing/originating.

39. The method according to claim 26, further comprising:
sending by the first network function, an eighth message to a second network function, in which the eighth message is configured to perform at least one of:
indicating the second network function to set up or reserve DC media resources; or
completing media negotiation with a calling party and/or a called party.

40. The method according to claim 39, wherein the eighth message comprises second information, and the second information comprises at least one of:
third indication information for indicating the second network function to set up or reserve DC media resources;
the processing indication/policy information; or
information of the first network function.

41. The method according to claim 40, wherein the eighth message further comprises third information, and the third information comprises at least one of:
first indication information on whether to establish a first channel;
second indication information on whether to process the second message;
a first policy on how to establish a first channel;
a second policy on how to process a first channel establishment request; or
the processing indication/policy information.

42. The method according to claim 41, wherein the processing indication/policy information, the first policy or the second policy comprises at least one of following processing ways for a DC, a DC media stream, a DC media description or a DC establishment request of terminating, forwarding, newly establishing/initially establishing/originating.

43. The method according to claim 37 or 38, further comprising:
receiving by the first network function, negotiated third DC information and/or DC media resource information from the first network device.

44. The method according to claim 39, further comprising:
receiving by the first network function, a ninth message from the second network function, wherein the ninth message comprises at least negotiated third DC information and/or DC media resource information.

45. The method according to claim 43 or 44, wherein the DC media resource information comprises at least one of: an Internet protocol (IP) address or a port number of the second network function.

46. The method according to claim 43 or 44, wherein the third DC information comprises at least one of:
negotiated DC information that a DC is established with a first device or a first network;
DC information that a DC is to be established with a second device or a second network;
negotiated DC information; or
DC information to be negotiated.

47. The method according to claim 44, further comprising:
sending by the first network function, a sixth message to the first network device, wherein the sixth message comprises at least the negotiated third DC information and/or DC media resource information.

48. The method according to claim 26, wherein the action performed by the first network function based on the second message comprises at least one of:
in case that a first network does not support a DC capability, determining to establish at least one of: a data channel (DC) between a first device and a second network, a DC between a second device and a second network, or a DC between a first device and a second device;
in case that a second network does not support a DC capability, determining to establish at least one of: a DC between a first device and a first network, a DC between a second device and a first network, or a DC between a first device and a second device;
in case that neither a first network nor a second network supports a DC capability, not establishing a DC;
in case that a first device does not support a DC capability, determining to establish a DC between a second device and a first network, and/or a DC between a second device and a second network;
in case that a second device does not support a DC capability, determining to establish a DC between a first device and a first network, and/or a DC between a first device and a second network;
in case that neither a first device nor a second device supports a DC capability, not establishing a DC;
in case that a DC establishment request aims at a DC media function of a first network, terminating the DC establishment request; or
in case that a DC establishment request aims at a DC media function of a second network or a second device, transparently transmitting/forwarding, or initializing/newly establishing the DC establishment request;
wherein the first network is a network where the first device is located, the second device is an opposite-end device relative to the first device, and the second network is a network where the second device is located.

49. The method according to claim 26, wherein the first channel comprises at least one of: a Bootstrap DC or an Application DC.

50. A method for information processing, comprising:
receiving by a second network function, a fourth message from a first network device, or receiving by a second network function, an eighth message from a first network function; and
sending by the second network function, a fifth message to the first network device based on the fourth message, or sending by the second network function, a ninth message to the first network function based on the eighth message;
wherein the fifth message and the ninth message comprise at least negotiated third data channel (DC) information and/or DC media resource information.

51. The method according to claim 50, wherein the fourth message is configured to perform at least one of: indicating the second network function to set up or reserve DC media resources; or completing media negotiation with a calling party and/or a called party; and/or
wherein the eighth message is at least configured to perform at least one of: indicating the second network function to set up or reserve DC media resources; or completing media negotiation with a calling party and/or a called party.

52. The method according to claim 50 or 51, wherein the eighth message comprises second information, and the second information comprises at least one of:
third indication information for indicating the second network function to set up or reserve DC media resources;
processing indication/policy information; or
information of the first network function.

53. The method according to claim 52, wherein the eighth message further comprises third information, and the third information comprises at least one of:
first indication information on whether to establish a first channel;
second indication information on whether to process the second message;
a first policy on how to establish a first channel;
a second policy on how to process a first channel establishment request; or
the processing indication/policy information.

54. The method according to claim 53, wherein the processing indication/policy information, the first policy or the second policy comprises at least one of following processing ways for a DC, a DC media stream, a DC media description or a DC establishment request of terminating, forwarding, newly establishing/initially establishing/originating.

55. The method according to claim 52, wherein the fourth message comprises at least one of information:
third indication information for indicating the second network function to set up or reserve DC media resources;
processing indication/policy information; or
information of the first network function.

56. The method according to claim 50, wherein the DC media resource information comprises at least one of: an Internet protocol (IP) address or a port number of the second network function.

57. The method according to claim 50, wherein the third DC information comprises at least one of:
negotiated DC information that a DC is established with a first device or a first network;
DC information that a DC is to be established with a second device or a second network;
negotiated DC information; or
DC information to be negotiated.

58. An apparatus for information processing, comprising:
a first communication unit, configured to receive a first message, wherein the first message comprises at least first data channel (DC) information; and
a first processing unit, configured to determine whether to send a second message to a first network function based on at least one of subscription information, user contract information, configuration information, or terminal/network capability information.

59. An apparatus for information processing, comprising:
a second communication unit, configured to receive a second message from a first network device; and
a second processing unit, configured to perform based on the second message, at least one action of:
determining whether to establish a first channel;
determining how to establish a first channel;
determining how to process a first channel establishment request; or
determining processing indication/policy information.

60. An apparatus for information processing, comprising:
a first receiving unit, configured to receive a fourth message from a first network device, or receive an eighth message from a first network function via a second network function; and
a first sending unit, configured to send a fifth message to the first network device based on the fourth message, or send a ninth message to the first network function based on the eighth message;
wherein the fifth message and the ninth message comprise at least negotiated third data channel (DC) information and/or DC media resource information.

61. A computer-readable storage medium having a computer program stored thereon which, when executed by a processor, to implement steps of the method according to any one of claims 1 to 25, or steps of the method according to any one of claims 26 to 49, or steps of the method according to any one of claims 50 to 57.

62. A communication device, comprising a processor, and a memory for storing a computer program executable on the processor, wherein when the computer program is executed, the processor implements steps of the method according to any one of claims 1 to 25, or steps of the method according to any one of claims 26 to 49, or steps of the method according to any one of claims 50 to 57.
